# EUROPEAN PATENT APPLICATION

(11) **EP 4 764 811 A1**
(43) Date of publication of application: **24.06.2026**
(21) Application number: 25215344.0
(22) Date of filing: 12.11.2025
(51) Int. Cl.: G06F 3/06

(54) **METHODS, APPARATUS, AND ARTICLES OF MANUFACTURE TO DYNAMICALLY MANAGE INPUT/OUTPUT TRANSACTIONS**

(30) Priority: 20.12.2024 US 202418990482
(71) Applicant: INTEL Corporation, Santa Clara, CA 95054 (US)
(72) Inventor: NELSON, Aruni P., Rocklin, CA, 95677 (US); POORNACHANDRAN, Rajesh, Portland, OR, 97229 (US)
(74) Representative: Rummler, Felix

(57) **Abstract**

Systems, apparatus, articles of manufacture, and methods are disclosed to dynamically manage input/output (I/O) transactions. An example apparatus includes circuitry to determine at least one of a first parameter assigned to an I/O transaction by a user, a second parameter for the I/O transaction based on at least a class of an I/O device, or a third parameter for the I/O transaction based on a usage pattern for a compute device coupled to the I/O device. Additionally, the example apparatus includes parameter management circuitry to determine a dynamic parameter to assign to the I/O transaction based on at least one of the first parameter, the second parameter, or the third parameter and cause scheduler circuitry to at least one of adjust a default bandwidth to be allocated to the I/O transaction based on the dynamic parameter or adjust a latency associated with the I/O transaction based on the dynamic parameter.

## Description

### BACKGROUND

A processor circuit, such as a central processor unit (CPU), a graphics processor unit (GPU), a Field Programmable Gate Array (FPGA), etc., may be in communication with one or more devices. For example, a processor circuit can be coupled to one or more peripheral devices (e.g., a display, a keyboard, a printer, etc.) and/or a network (e.g., wired or wireless). In computing applications, devices can communicate via one or more communication interfaces. For example, devices can communicate via a wired interface, an optical interface, and/or a wireless interface. In a wired network, devices may be in communication via a communication bus.

### BRIEF DESCRIPTION OF THE DRAWINGS

FIG. 1 is a block diagram of an example compute device in which an example programmable circuit die includes example dynamic input/output (I/O) priority prediction circuitry to dynamically allocate bandwidth of a communication interface to communication links.
FIG. 2 is a block diagram illustrating an example implementation of the dynamic I/O priority prediction circuitry and an example implementation of the I/O circuitry of FIG. 1.
FIG. 3 is a block diagram illustrating an example use case for the dynamic I/O priority prediction circuitry of FIG. 2 for dynamic I/O calibration across multiple applications.
FIG. 4 is a flowchart representative of example machine-readable instructions and/or example operations that may be executed, instantiated, and/or performed by example programmable circuitry to implement the dynamic I/O priority prediction circuitry of FIG. 2 and the I/O circuitry of FIG. 2.
FIG. 5 is a flowchart representative of example machine-readable instructions and/or example operations that may be executed, instantiated, and/or performed by example programmable circuitry to implement the user configuration control circuitry of FIG. 2.
FIG. 6 is a flowchart representative of example machine-readable instructions and/or example operations that may be executed, instantiated, and/or performed by example programmable circuitry to implement the operating system (OS) analysis circuitry of FIG. 2.
FIG. 7 is a flowchart representative of example machine-readable instructions and/or example operations that may be executed, instantiated, and/or performed by example programmable circuitry to implement the usage pattern analysis circuitry of FIG. 2.
FIG. 8 is a block diagram of an example processing platform including programmable circuitry structured to execute, instantiate, and/or perform the example machine-readable instructions and/or perform the example operations of FIGS. 4, 5, 6, and/or 7 to implement the dynamic I/O priority prediction circuitry of FIG. 2 and the I/O circuitry of FIG. 2.
FIG. 9 is a block diagram of an example implementation of the programmable circuitry of FIG. 8.
FIG. 10 is a block diagram of another example implementation of the programmable circuitry of FIG. 8.

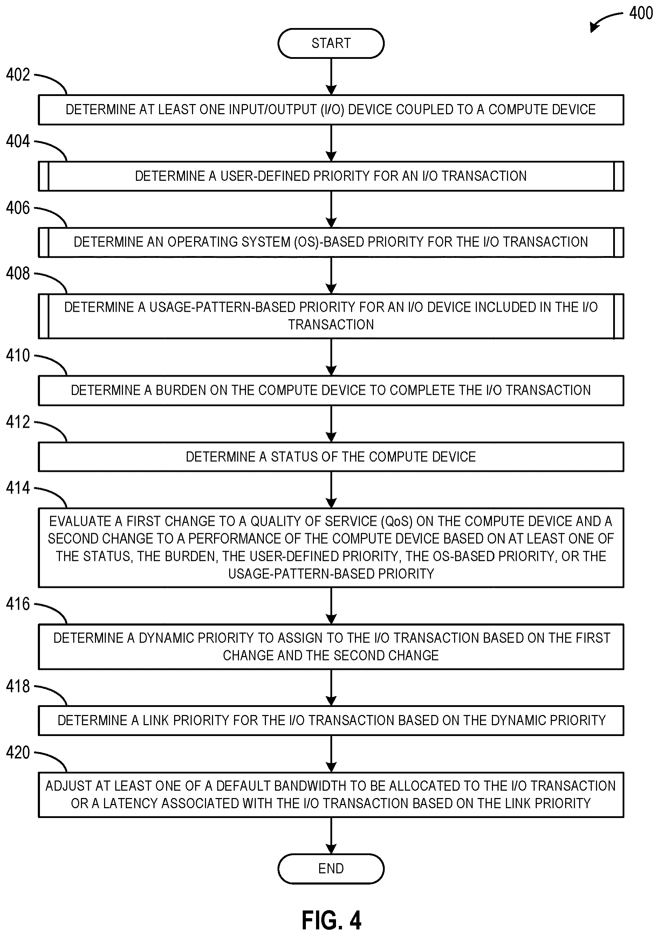

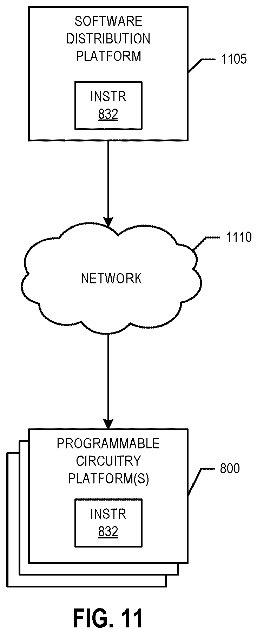

FIG. 11 is a block diagram of an example software/firmware/instructions distribution platform (e.g., one or more servers) to distribute software, instructions, and/or firmware (e.g., corresponding to the example machine-readable instructions of FIGS. 4, 5, 6, and/or 7) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

### DETAILED DESCRIPTION

In computing applications, a programmable circuit, such as a CPU, GPU, FPGA, etc., may be in communication with one or more devices. Such devices may be referred to as input/output (I/O) devices. Example I/O devices include peripheral devices (e.g., displays, cameras, memory or storage devices, printers, flash drives, power banks, etc.), other processor circuits (e.g., CPUs, GPUs, FPGAs, application specific integrated circuits (ASICs), network interface controllers (NICs), accelerator circuits, etc.), network devices (e.g., NICs, routers, modems, etc.), and compute platforms (e.g., laptops, mobile devices, etc.), among others.

I/O transactions between devices can be performed according to one or more communication protocols. Example communication protocols include wired communication protocols and wireless communication protocols. Example wired communication protocols include a Universal Serial Bus (USB^{®}) protocol (e.g., USB^{®} 1.x, USB^{®} 2.0, USB^{®} 3.x, USB4^{®}, etc.), a Thunderbolt^{™} protocol (e.g., Thunderbolt^{™} 1, Thunderbolt^{™} 2, Thunderbolt^{™} 3, Thunderbolt^{™} 4, Thunderbolt^{™} 5, etc.), a Peripheral Component Interconnect (PCI^{®}) protocol (e.g., PCI^{®}, PCI Express (PCIe^{®}), PCI Extended (PCI-X^{®}), etc.), and a Compute Express Link (CXL^{®}) protocol (e.g., CXL^{®} for cache-coherent accesses to system memory (CXL.cache or CXL.$), CXL^{®} for device memory (CXL.Mem), CXL^{®} for PCIe^{®}-based I/O devices (CXL.IO/PCIe^{®}), etc.), among others. Example wireless communication protocols include a Miracast^{®} protocol, a Bluetooth^{®} protocol, and an AirPlay^{®} protocol, among others.

In some examples, a compute platform utilizes a communication protocol (e.g., USB4^{®}, Thunderbolt^{™}, etc.) to communicate a variety of traffic types among a variety of I/O devices (e.g., a display, a PCIe^{®}-connected device, a USB^{®}-connected device, etc.). A communication protocol defines rules, syntax, semantics, and synchronization for communications according to the communication protocol. The USB4^{®} protocol provides for different types of I/O transfers, also referred to as I/O transactions, based on the type of data to be transmitted.

For example, the USB4^{®} protocol provides for control transactions, isochronous transactions, interrupt transactions, and bulk transactions. A control transaction refers to a bi-directional transaction reserved for a host device (e.g., a desktop computer, a CPU, etc.) to send and/or request configuration information and/or commands to and/or from an I/O device. An isochronous transaction refers to a transaction including time-critical, error-tolerant, and/or substantially real-time information (e.g., audio data, video data, etc.) that is required to be transmitted at a constat rate according to an application associated with the transaction. An interrupt transaction refers to a transaction that has a defined polling rate to determine if an I/O device has data to transmit and/or to signal the presence of data from another I/O device. A bulk transaction refers to a transaction that includes a large amount of data and that requires guaranteed delivery but does not require a specific bandwidth or latency according to an application associated with the transaction.

Modern I/O systems and communication protocols (e.g., the USB4^{®} protocol) do not include a way to dynamically provide priority to and/or dynamically allocate bandwidth to different types of I/O transactions or I/O devices within a compute platform. Example I/O transactions include (e.g., non-periodic I/O transactions (e.g., non-isochronous I/O transactions), periodic I/O transactions (e.g., isochronous I/O transactions), I/O transactions including certain traffic classes, and I/O transactions including certain classes of I/O devices, among others. For example, the USB4^{®} protocol statically allocates higher bandwidth for isochronous transactions but does not permit higher bandwidth to be allocated to non-isochronous transactions.

Specifically, the USB4^{®} protocol reserves 10% of the available bandwidth for communication link overhead and non-isochronous tunneled transactions (e.g., PCIe^{®} transactions, bulk transactions, etc.) and reserves the remaining 90% of the available bandwidth for isochronous tunneled transactions (e.g., display transactions). Additionally, the arbitration mechanism of the USB4^{®} protocol, which routes tunneled traffic, operates on the static bandwidth allocation between non-isochronous and isochronous tunneled transactions regardless of how a compute platform is utilized, what workload is running on the compute platform, or user preference for which workload(s) running on the compute platform is/are to be prioritized. Furthermore, the arbitration mechanism of the USB4^{®} protocol can only allocate additional bandwidth to non-isochronous transactions if a device requiring isochronous transactions (e.g., a display) is disconnected from the compute platform. In other words, the arbitration mechanism of the USB4^{®} protocol cannot dynamically allocate bandwidth to non-isochronous transactions while a device requiring isochronous transactions is connected to the compute platform, even if the device is not in use.

As such, the performance of a compute platform, power consumption of the compute platform, and end-user experience may be negatively impacted as a result of the I/O resources of the compute platform being underutilized. For example, if a user attempts to back-up a large amount of data (e.g., on the scale of gigabytes (GB)) from one storage device of a compute device to another storage device overnight, the data transfer may be constrained given the static bandwidth allocation for non-isochronous transactions (e.g., for storage traffic) and isochronous transactions (e.g., for display traffic) assuming a device requiring isochronous transactions is connected to the compute device.

In some examples, if display data is sent as a bulk transaction, the bulk transaction will be allocated at most, 10% of the bandwidth of the communication link instead of 90% of the bandwidth that is normally available for isochronous transactions (e.g., display data transactions). In such examples, modern I/O systems and communication protocols (e.g., the USB4^{®} protocol) do not include a way to distinguish between bulk transactions including display data and bulk transactions including mass storage data. For example, if a user is performing video editing while storage operations are also being performed, then modern I/O systems and communication protocols (e.g., the USB4^{®} protocol) do not include a way to assign a higher priority to the storage operations. Also, modern I/O systems and communication protocols (e.g., the USB4^{®} protocol) do not include a way to assign a higher priority to I/O devices that are used more frequently by a user. Additionally, modern I/O systems and communication protocols (e.g., the USB4^{®} protocol) do not include a way to manage different I/O transactions based on compute platform status (e.g., available power, available data bandwidth, etc.) and performance.

Examples disclosed herein include dynamic I/O priority prediction (DIPP) circuitry to prioritize I/O transactions and/or I/O devices based on user configuration, information from an operating system (OS) of a compute platform, and/or usage trends of one or more I/O devices coupled to the compute platform. Example DIPP circuitry disclosed herein communicates with the OS of a compute platform and/or accesses a user configuration to access information associated with I/O transactions and/or I/O devices. Based on the information, example DIPP circuitry disclosed herein assigns and/or configures a priority for I/O transactions to and/or from I/O devices coupled to an I/O port of the compute platform controlled by the respective I/O controllers of the compute platform. As such, examples disclosed herein improve performance of I/O resources of a compute platform, reduce power consumption of the I/O resources, and improve user experience of the compute platform.

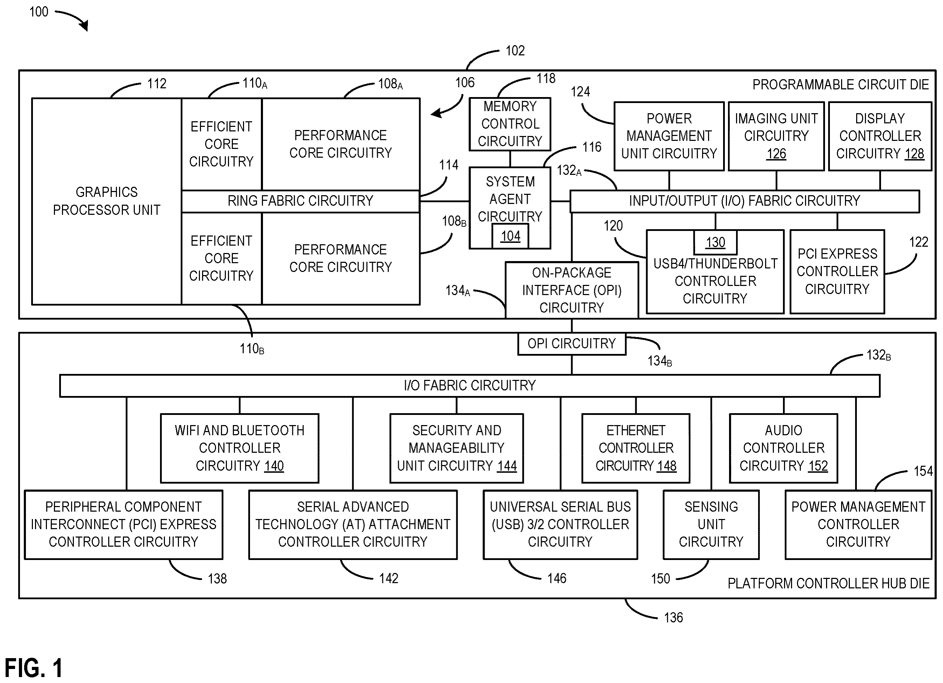

FIG. 1 is a block diagram of an example compute device 100 in which an example programmable circuit die 102 includes example dynamic input/output (I/O) priority prediction (DIPP) circuitry 104 to dynamically allocate bandwidth of a communication interface to communication links. For example, a communication interface refers to an interface (e.g., a wired interface, a wireless interface, an optical interface, etc.) via which one or more compute devices communicate. In the example of FIG. 1, the programmable circuit die 102 includes example processor circuitry 106. The example processor circuitry 106 of FIG. 1 includes a first example performance core circuitry 108_{A}, a second example performance core circuitry 108_{B}, a first example efficient core circuitry 110_{A}, a second example efficient core circuitry 110_{B}, and an example graphics processor unit (GPU) 112.

In the illustrated example of FIG. 1, the first performance core circuitry 108_{A} and the second performance core circuitry 108_{B} are high-performance processor cores designed to process data quickly while maintaining performance efficiency. In the example of FIG. 1, the first efficient core circuitry 110₄ and the second efficient core circuitry 110_{B} are designed for increased performance on smaller (e.g., background) tasks. For example, one or more of the first efficient core circuitry 110₄ or the second efficient core circuitry 110_{B} can work in concert with one or more of the first performance core circuitry 108_{A} or the second performance core circuitry 108_{B} to accelerate core-intensive tasks (e.g., when rendering video).

In the illustrated example of FIG. 1, the first performance core circuitry 108_{A} and the second performance core circuitry 108_{B} are physically larger than the first efficient core circuitry 110₄ and the second efficient core circuitry 110_{B}. For example, each of the first efficient core circuitry 110₄ and the second efficient core circuitry 110_{B} is physically smaller than a performance core, with multiple efficient cores being capable of fitting into the physical space of one performance core. In the example of FIG. 1, the first performance core circuitry 108_{A}, the second performance core circuitry 108_{B}, the first efficient core circuitry 110_{A}, the second efficient core circuitry 110_{B}, and the GPU 112 are in communication via an example ring fabric circuitry 114. The ring fabric circuitry 114 of FIG. 1 provides a data fabric interface between the various compute circuitry of the programmable circuit die 102, last-level cache, and die-to-die interface(s).

In the illustrated example of FIG. 1, the programmable circuit die 102 includes example system agent circuitry 116, example memory control circuitry 118, and one or more I/O controllers. For example, the one or more I/O controllers allow the processor circuitry 106 to access one or more communication interfaces through respective I/O ports. In the example of FIG. 1, the one or more I/O controllers include example USB4^{®} and/or Thunderbolt^{™} controller circuitry 120, example PCIe^{®} controller circuitry 122, example power management unit circuitry 124, example imaging unit circuitry 126, and example display controller circuitry 128.

In the illustrated example of FIG. 1, the example system agent circuitry 116 interfaces with the last-level cache and is responsible for managing cache coherency. For example, in a multi-level cache hierarchy, last-level cache refers to the last level of cache before a processor circuit accesses the main memory of a compute device. Additionally, the system agent circuitry 116 manages one or more internal and/or external point-to-point processor interconnect links with the programmable circuit die 102. In the example of FIG. 1, the system agent circuitry 116 includes the DIPP circuitry 104. Also, in the example of FIG. 1, the memory control circuitry 118 controls memory access requests for data requested by the processor circuitry 106.

In the illustrated example of FIG. 1, the USB4^{®} and/or Thunderbolt^{™} controller circuitry 120 facilitates communication between the programmable circuit die 102 and a USB4^{®}-connected and/or Thunderbolt^{™}-connected device. In the example of FIG. 1, the PCIe^{®} controller circuitry 122 facilitates communication between the programmable circuit die 102 and a PCIe^{®}-connected device. Additionally, the power management unit circuitry 124 facilitates communication between the programmable circuit die 102 for power management of the first performance core circuitry 108_{A}, the second performance core circuitry 108_{B}, the first efficient core circuitry 110_{A}, and the second efficient core circuitry 110_{B} of the compute device 100. In the example of FIG. 1, the imaging unit circuitry 126 facilitates communication between the programmable circuit die 102 and an imaging device (e.g., a camera). Also, the display controller circuitry 128 facilitates communication between the programmable circuit die 102 and a display device (e.g., a monitor).

In the illustrated example of FIG. 1, the USB4^{®} and/or Thunderbolt^{™} controller circuitry 120 includes example input/output (I/O) circuitry 130. In the example of FIG. 1, the I/O circuitry 130 is implemented by hardware, software, and/or firmware. Additionally, in the example of FIG. 1, the I/O circuitry 130 interfaces with the USB4^{®}-connected and/or Thunderbolt^{™}-connected device to access information associated with the device and/or schedule I/O transactions with the device. In additional or alternative examples, the I/O circuitry 130 resides in one or more of the USB4^{®} and/or Thunderbolt^{™} controller circuitry 120, the PCIe^{®} controller circuitry 122, the power management unit circuitry 124, the imaging unit circuitry 126, or the display controller circuitry 128.

In the illustrated example of FIG. 1, the programmable circuit die 102 includes a first example input/output (I/O) fabric circuitry 132_{A} that provides a data fabric interface between the various compute circuitry of the programmable circuit die 102 and one or more I/O controllers of the compute device 100. In the example of FIG. 1, the programmable circuit die 102 also includes a first example on-package interface (OPI) circuitry 134₄ that provides an interface between the programmable circuit die 102 and other components of the compute device 100. For example, the compute device 100 includes an example platform controller hub die 136 that manages communication between the programmable circuit die 102 and one or more I/O devices.

In the illustrated example of FIG. 1, the platform controller hub die 136 includes a second example on-package interface (OPI) circuitry 134₃ that provides an interface with the first OPI circuitry 134_{A} of the programmable circuit die 102. In the example of FIG. 1, the platform controller hub die 136 also includes a second example input/output (I/O) fabric circuitry 132_{B} that provides a data fabric interface between the second OPI circuitry 134_{B} and one or more I/O controllers of the platform controller hub die 136. Additionally, the platform controller hub die 136 includes one or more I/O controllers.

For example, the platform controller hub die 136 includes example PCIe^{®} controller circuitry 138, example Wi-Fi and/or Bluetooth^{®} controller circuitry 140, example serial advanced technology attachment (SATA) controller circuitry 142, example security and manageability unit circuitry 144, example USB^{®} 3 and/or USB^{®} 2 controller circuitry 146, example ethernet controller circuitry 148, example sensing unit circuitry 150, example audio controller circuitry 152, and example power management controller circuitry 154. In the example of FIG. 1, the PCIe^{®} controller circuitry 138 facilitates communication between the platform controller hub die 136 and a PCIe^{®}-connected device. Additionally, the Wi-Fi and/or Bluetooth^{®} controller circuitry 140 facilitates communication between the platform controller hub die 136 and a Wi-Fi-connected and/or Bluetooth^{®}-connected device.

In the illustrated example of FIG. 1, the SATA controller circuitry 142 facilitates communication between the platform controller hub die 136 and a SATA-connected device. In the example of FIG. 1, the security and manageability unit circuitry 144 manages the security assets and policies of the compute device 100. Additionally, the USB^{®} 3 and/or USB^{®} 2 controller circuitry 146 facilitates communication between the platform controller hub die 136 and a USB^{®} 3-connected and/or a USB^{®} 2-connected device.

In the illustrated example of FIG. 1, the ethernet controller circuitry 148 facilitates communication between the platform controller hub die 136 and an ethernet-connected device. In the example of FIG. 1, the sensing unit circuitry 150 facilitates communication between the platform controller hub die 136 and a sensor. Additionally, the audio controller circuitry 152 facilitates communication between the platform controller hub die 136 and an audio device (e.g., a microphone, a speaker, etc.). In the example of FIG. 1, the power management controller circuitry 154 manages power of the compute device 100. In some examples, the I/O circuitry 130 resides in one or more of the PCIe^{®} controller circuitry 138, the Wi-Fi and/or Bluetooth^{®} controller circuitry 140, the SATA controller circuitry 142, the security and manageability unit circuitry 144, the USB^{®} 3 and/or USB^{®} 2 controller circuitry 146, the ethernet controller circuitry 148, the sensing unit circuitry 150, the audio controller circuitry 152, or the power management controller circuitry 154.

As described above, the system agent circuitry 116 includes the example DIPP circuitry 104. In the example of FIG. 1, the DIPP circuitry 104 is implemented by hardware, software, and/or firmware. Additionally, in the example of FIG. 1, the DIPP circuitry 104 assigns priorities (e.g., based on priority hints provided via link parameters or priorities assigned by an OS of the compute device 100, a user configuration, and/or an I/O device usage pattern) among the I/O devices that are in use and/or that share bandwidth.

In the illustrated example of FIG. 1, the DIPP circuitry 104 flexibly prioritizes I/O transactions based on factors such as a class or type of device (e.g., USB^{®} device classes, standard PCIe^{®} devices, etc.), user preference, device usage pattern-based intelligence, and quality of service (QoS) profiles (e.g., a gaming profile, a storage profile, a video streaming profile, etc.). Based on the priorities assigned by the DIPP circuitry 104, the I/O circuitry 130 adjusts at least one of default bandwidths to be allocated to I/O transactions or latencies (e.g., times at which the I/O transactions are to start) associated with the I/O transactions. As such, the DIPP circuitry 104 facilitates higher bandwidth and higher bus access for prioritized I/O transactions that share bandwidth with other I/O transaction types or I/O transactions from other I/O devices.

For example, the DIPP circuitry 104 discovers device class (e.g., device type) information of I/O devices coupled to the programmable circuit die 102 and/or the compute device 100. Based on the device class information, the DIPP circuitry 104 dynamically assigns a link parameter (e.g., a candidate priority) to one or more I/O transaction to and/or from the I/O devices connected to an I/O port. In some examples, the DIPP circuitry 104 can implement additional or alternative algorithms based on artificial intelligence (AI) such as algorithms that analyze telemetry data received from I/O devices and/or based on communication patterns associated with the programmable circuit die 102 and/or the compute device 100.

In the illustrated example of FIG. 1, the DIPP circuitry 104 causes the OS of the compute device 100 to provide a user interface via which a user of the compute device 100 can assign a link parameter to one or more I/O devices and therefore I/O transaction including the one or more I/O devices. Additionally, the DIPP circuitry 104 interfaces with the OS of the compute device 100 to access information about the type or class of I/O transactions and/or type or class of I/O devices. Based on the type or class of I/O transactions and/or I/O devices, the DIPP circuitry 104 assigns a link parameter to one or more I/O devices and/or I/O transactions. For example, based on information from the OS, the DIPP circuitry 104 can assign a link parameter for a gaming mode of operation or an I/O transfer mode of operation, among others.

In the illustrated example of FIG. 1, as described above, the I/O circuitry 130 adjusts at least one of default bandwidths to be allocated to I/O transactions or latencies (e.g., times at which the I/O transactions are to start) associated with the I/O transactions. In the example of FIG. 1, based on the link parameters (e.g., priorities) assigned by the DIPP circuitry 104, power available at the compute device 100, and/or one or more performance profiles for the compute device 100, the I/O circuitry 130 schedules and/or arbitrates I/O transactions for I/O devices in use by the programmable circuit die 102 and/or the compute device 100. For example, the I/O circuitry 130 schedules and/or arbitrates I/O transactions for I/O devices in use by the programmable circuit die 102 and/or the compute device 100 by increasing or reducing the priority of one or more I/O transactions (e.g., based on an assigned priority indicating that an I/O transaction should be allocated higher utilization of the I/O bus by the I/O controller (e.g., the USB4^{®} and/or Thunderbolt^{™} controller circuitry 120 and USB4^{®} bus)).

As described above, by determining classes or types of devices, accessing user preference, and/or tracking device usage patterns, the DIPP circuitry 104 dynamically changes link parameters (e.g., priorities) and provides the link parameters to the I/O circuitry 130. As such, the I/O circuitry 130 can dynamically accelerate specific I/O transactions versus other (e.g., lower priority) I/O transactions. In some examples, the DIPP circuitry 104 and/or the I/O circuitry 130 can implement continuous in-field learning to adapt on the fly to usage scenarios of the programmable circuit die 102 and/or the compute device 100.

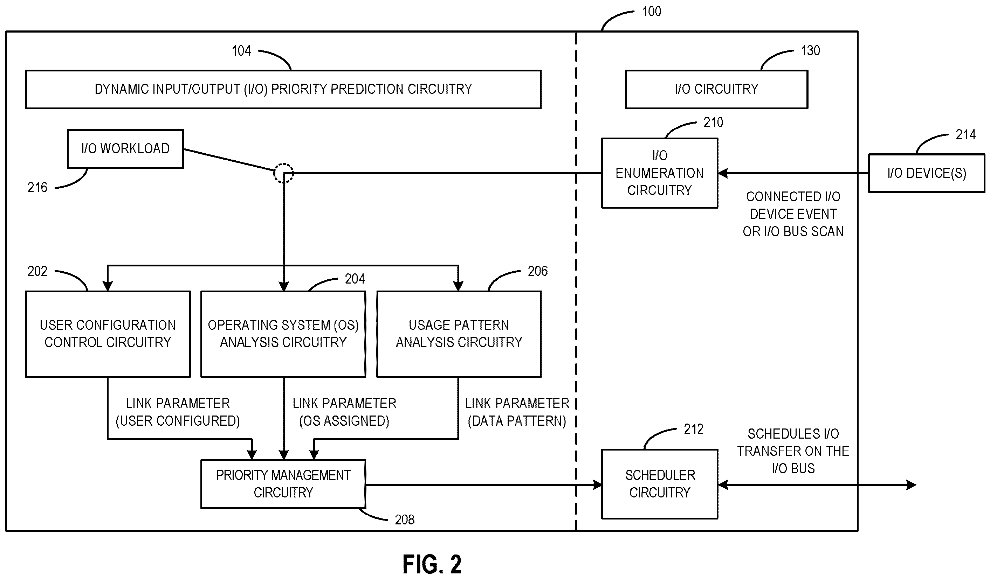

FIG. 2 is a block diagram illustrating an example implementation of the DIPP circuitry 104 and an example implementation of the I/O circuitry 130 of FIG. 1. In the example of FIG. 2, the DIPP circuitry 104 includes example user configuration control circuitry 202, example operating system (OS) analysis circuitry 204, example usage pattern analysis circuitry 206, and example priority management circuitry 208. Also, in the example of FIG. 2, the I/O circuitry 130 includes example I/O enumeration circuitry 210 and example scheduler circuitry 212.

In the illustrated example of FIG. 2, the DIPP circuitry 104 of FIG. 2 and/or the I/O circuitry 130 of FIG. 2 may be instantiated (e.g., creating an instance of, bring into being for any length of time, materialize, implement, etc.) by programmable circuitry such as a CPU executing first instructions. Additionally or alternatively, the DIPP circuitry 104 of FIG. 2 and/or the I/O circuitry 130 of FIG. 2 may be instantiated (e.g., creating an instance of, bring into being for any length of time, materialize, implement, etc.) by (i) an ASIC and/or (ii) an FPGA structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers.

In the illustrated example of FIG. 2, the I/O enumeration circuitry 210 is implemented by a combination or hardware and software. For example, the I/O enumeration circuitry 210 is implemented by hardware circuitry resident in the USB4^{®} and/or Thunderbolt^{™} controller circuitry 120 and OS-level software executed by the processor circuitry 106 (e.g., one or more of the first performance core circuitry 108_{A}, the second performance core circuitry 108_{B}, the first efficient core circuitry 110_{A}, the second efficient core circuitry 110_{B}, or the GPU 112. In the example of FIG. 2, the I/O enumeration circuitry 210 interfaces with one or more example I/O devices 214 in communication with the compute device 100. In the example of FIG. 2, the I/O enumeration circuitry 210 determines respective device classes of the one or more I/O devices 214 in communication with the compute device 100. For example, the I/O enumeration circuitry 210 (e.g., the OS-level software of the I/O enumeration circuitry 210) determines one or more device classes of the one or more I/O devices 214. In the example of FIG. 2, the I/O enumeration circuitry 210 detects a connection event when the one or more I/O devices 214 are connected to the compute device 100 and/or performs a scan of an I/O bus (e.g., a USB4^{®} and/or Thunderbolt^{™} bus) of the compute device 100.

In the illustrated example of FIG. 2, based on detection of the one or more I/O devices 214 and one or more I/O transactions including the one or more I/O devices 214, the I/O enumeration circuitry 210 sends an example I/O workload 216 to the DIPP circuitry 104. For example, the I/O workload 216 includes one or more I/O transactions to be serviced by the DIPP circuitry 104 and identifies a device class of the one or more I/O devices 214 included in the one or more I/O transactions. Additionally or alternatively, the I/O workload 216 identifies a traffic class of each of the one or more I/O transactions.

In the illustrated example of FIG. 2, the user configuration control circuitry 202 communicates with an OS of the compute device 100 to cause the OS to present an I/O configuration user interface (UI). For example, the I/O configuration UI provides an interface to allow a user to assign one or more link parameters (e.g., one or more priorities) to the one or more I/O devices 214. As such, via the I/O configuration UI, a user can select one or more policies for I/O prioritization and/or can configure scheduled times when specified I/O devices are assigned a higher priority than other I/O devices. For example, a user can set a specific time when a storage device is prioritized over a display device (e.g., for backup operation). In some examples (e.g., the USB4^{®} protocol), priorities range from one to four with one corresponding to the highest priority level.

In the illustrated example of FIG. 2, the OS analysis circuitry 204 interfaces with the OS of the compute device 100 (e.g., the I/O enumeration circuitry 210) to access device class or traffic class information for the one or more I/O devices 214 and/or the one or more I/O transactions included in the I/O workload 216. Based on the device class information, the OS analysis circuitry 204 assigns one or more link parameters (e.g., one or more priorities) to the one or more I/O devices 214. Additionally or alternatively, based on the traffic class information, the OS analysis circuitry 204 assigns one or more link parameters (e.g., one or more priorities) to the one or more I/O transactions included in the I/O workload 216.

In the illustrated example of FIG. 2, the usage pattern analysis circuitry 206 analyzes application and/or I/O device usage by the compute device 100 to determine one or more usage patterns for one or more applications implemented by the compute device 100 and/or the one or more I/O devices 214. For example, the usage pattern analysis circuitry 206 interfaces with and/or is integrated with user presence and/or user identification detection circuitry to determine usage patterns for specific users of the compute device 100. Based on the one or more usage patterns, the usage pattern analysis circuitry 206 predicts trends for application and/or I/O device usage at a fine granularity. As such, based on the one or more usage patterns, the usage pattern analysis circuitry 206 assigns one or more link parameters (e.g., one or more priorities) to the one or more I/O devices 214 and/or the one or more I/O transactions included in the I/O workload 216.

In some examples, the usage pattern analysis circuitry 206 generates one or more usage pattern-based link parameters based on historical data pertaining to I/O device usage, device information (e.g., device class), time of device usage, and/or I/O operations initiated by a user. Additionally or alternatively, the usage pattern analysis circuitry 206 generates one or more usage pattern-based link parameters based on one or more task queues associated with the one or more I/O devices 214, one or more applications executed by the compute device 100, a duration of usage of the compute device 100, size of data to be communicated via the one or more I/O transactions, concurrent ones of the one or more I/O devices 214 that are in use, and/or performance characteristics (e.g., available power) of the compute device 100. By assigning one or more link parameters based on usage pattern, the usage pattern analysis circuitry 206 ensures that priorities assigned to the one or more I/O transactions included in the I/O workload 216 do not degrade the functionality of one or more I/O devices that require a guaranteed bandwidth and/or quality of service.

In the illustrated example of FIG. 2, the priority management circuitry 208 processes the one or more link parameters (e.g., one or more priorities) provided by the user configuration control circuitry 202, the OS analysis circuitry 204, and/or the usage pattern analysis circuitry 206. Based on the one or more provided link parameters, the priority management circuitry 208 generates one or more dynamic link parameters (e.g., one or more dynamic priorities) to assign to the one or more I/O transactions included in the I/O workload 216. For example, the priority management circuitry 208 utilizes the one or more link parameters determined based on the I/O configuration UI in conjunction with the one or more link parameters determined based on OS-provided information (e.g., device class, traffic class, etc.) to determine one or more dynamic link parameters for the one or more I/O transactions included in the I/O workload 216.

Additionally or alternatively, the priority management circuitry 208 utilizes the one or more link parameters provided by the user configuration control circuitry 202, the OS analysis circuitry 204, and/or the usage pattern analysis circuitry 206 to dynamically assign link parameters to I/O transactions that share bandwidth and/or to I/O devices that are in concurrent use (e.g., by the compute device 100). In the example of FIG. 2, the priority management circuitry 208 sends one or more dynamic link parameters (e.g., one or more dynamic priorities) to the scheduler circuitry 212 of the I/O circuitry 130. As such, the scheduler circuitry 212 can schedule and/or arbitrate the one or more I/O transactions of the I/O workload 216 such that an I/O transaction having the highest priority (e.g., among the I/O workload 216) is allocated increased access to an I/O bus (e.g., a USB4^{®} and/or Thunderbolt^{™} bus) and is allocated increased bandwidth.

In some examples, the priority management circuitry 208 includes memory (e.g., one or more counters, static random-access memory (SRAM), etc.) to track dynamic priorities assigned to I/O transactions. For example, after assigning dynamic priorities to I/O transactions, the priority management circuitry 208 can update internal memory with the dynamic priorities assigned to the I/O transactions, the I/O transaction types (e.g., isochronous, bulk, etc.) of the I/O transactions, and/or the traffic classes of the I/O transactions. As such, the priority management circuitry 208 can determine dynamic priorities for future I/O transactions based on data stored in the internal memory.

In the illustrated example of FIG. 2, the scheduler circuitry 212 receives the one or more dynamic priorities provided by the priority management circuitry 208, the size of data in the one or more I/O transactions of the I/O workload 216, time required to perform the one or more I/O transactions, and/or a status of the compute device 100 to arbitrate between the one or more I/O transactions. For example, a status of the compute device 100 includes available power (e.g., remaining battery capacity) at the compute device 100 and available bandwidth on an I/O interface of the compute device 100. In the example of FIG. 2, based on one or more dynamic priorities provided by the priority management circuitry 208, the size of data in the one or more I/O transactions of the I/O workload 216, time required to perform the one or more I/O transactions, and/or status of the compute device 100, the scheduler circuitry 212 can determine if one I/O transaction should be allocated more bandwidth or should be completed sooner than another I/O transaction when scheduling one or more I/O transactions.

As described above, the example of FIG. 2 illustrates priority prediction and intelligent scheduling for I/O transactions. In an example video playback application, the packet processing sequence includes a NIC of the compute device 100 downloading a bitstream, the GPU 112 (e.g., a general-purpose GPU (GPGPU)) decoding the bitstream, and the system agent circuitry 116 sending the decoded bitstream to a display of the compute device 100 via the display controller circuitry 128 over a display port. In such an example, the display controller circuitry 128 also includes the I/O circuitry 130.

Additionally, in such an example, the DIPP circuitry 104 generates a histogram of the packet flow across the compute device 100 (e.g., a heterogeneous system) to derive a dependency graph for efficient traffic arbitration (e.g., NIC → GPGPU → Display). Based on one or more user preferences specified via the I/O configuration UI, one or more device classes and/or traffic classes, and/or a dependency graph derived for the compute device 100, the DIPP circuitry 104 assigns dynamic link parameters for an intelligent allocation of priority on a per device basis. Based on device priority, the scheduler circuitry 212 allocates increased I/O bus access and increased bandwidth to the highest priority device to achieve the best quality of service, performance, and user experience for available power at the compute device 100.

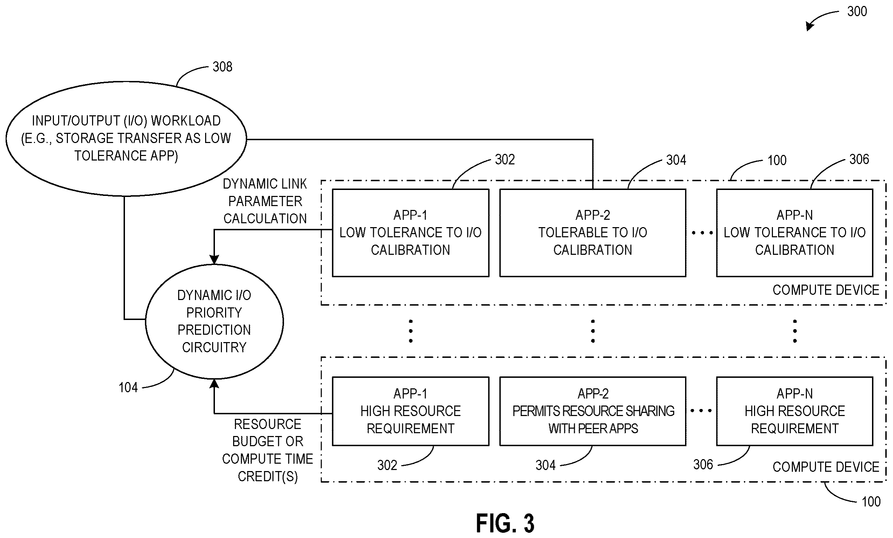

FIG. 3 is a block diagram illustrating an example use case 300 for the DIPP circuitry 104 of FIG. 2 for dynamic I/O calibration across multiple applications. In the example of FIG. 3, the compute device 100 implements a first example application 302, a second example application 304, and an Nth example application 306. Additionally, in the example of FIG. 3, the first application 302, the second application 304, and the Nth application 306 have different requirements in terms of resource requirements and tolerance to I/O bandwidth adjustment (e.g., calibration) for different traffic classes based on the quality of service expected from the traffic classes.

For example, the first application 302 has a high resource requirement and low tolerance to I/O bandwidth adjustment, the second application 304 permits resource sharing with peer applications and is tolerable to I/O bandwidth adjustment, and the Nth application 306 has a high resource requirement and low tolerance to I/O bandwidth adjustment. In the example of FIG. 3, the low tolerance applications (e.g., the first application 302 and the Nth application 306) may not allow for modification of link parameters. Additionally, tolerable applications (e.g., the second application 304) may allow for modification of link parameters.

In the illustrated example of FIG. 3, the DIPP circuitry 104 accesses an example I/O workload 308 including one or more I/O transactions associated with the first application 302, the second application 304, and the Nth application 306 and computes (e.g., calculates) one or more dynamic link parameters for one or more I/O transactions included in the I/O workload 308. In the example of FIG. 3, based on the tolerance of the applications, resource budget for the applications, and/or compute time associated with the one or more I/O transactions, the DIPP circuitry 104 computes one or more dynamic link parameters for the one or more I/O transactions. For example, by monitoring the usage patterns of the compute device 100, correlation between usage and status of the compute device 100, and/or duration of use and time of use of the compute device 100, the DIPP circuitry 104 can judiciously assign link parameters to one or more I/O devices and/or one or more I/O transactions.

Additional example use cases for the DIPP circuitry 104 of FIG. 2 include (1) allocating bandwidth between a display device and a storage device that are both connected to the compute device 100 and (2) allocating bandwidth between a display device, a network device, and a storage device connected to the compute device 100. In the first example, a user assigns a higher priority to the display device over the storage device and schedules a backup of the compute device 100 on the storage device to occur daily. In the first example, the DIPP circuitry 104 analyzes a usage pattern of the compute device 100 to determine periods of time when the compute device 100 and the display device are idle (e.g., not performing processing, not communicating I/O transactions, etc.).

In the first example, based on the determined idle periods outlined in the usage pattern, the usage pattern analysis circuitry 206 assigns link parameters (e.g., priorities) to the display device and the storage device. Additionally, in the first example, the priority management circuitry 208 examines the link parameters assigned to the display device and the storage device by the user (e.g., via the UI provided based on at least one instruction from the user configuration control circuitry 202) and the link parameters assigned by the usage pattern analysis circuitry 206. For example, the priority management circuitry 208 can override the user-assigned link parameters for the display device and the storage device to assign a higher link parameter to the storage device and a lower link parameter to the display device during periods when the compute device 100 and the display device are idle and a backup operation is scheduled.

In the first example, based on the dynamic link parameters set by the priority management circuitry 208, the scheduler circuitry 212 determines (e.g., computes) the link parameters (e.g., bandwidth) for use during communication with the display device and the storage device. For example, the scheduler circuitry 212 treats I/O transactions including the storage device with higher priority than I/O transactions including the display device. As such, the scheduler circuitry 212 allocates more bandwidth to the storage device than to the display device. In the first example, after the backup operation is complete, the priority management circuitry 208 restores the user-assigned link parameters, updates the dynamic link parameters, and sends the dynamic link parameters to the scheduler circuitry 212.

In the second example, the I/O enumeration circuitry 210 determines a device class of each of the display device, the network device, and the storage device. Based on the device class of each of the display device, the network device, and the storage device, the OS analysis circuitry 204 determines attributes of the device classes that impact bandwidth and latency requirements of each of the display device, the network device, and the storage device. Based on the determined attributes, the OS analysis circuitry 204 assigns link parameters to the display device, the storage device, and the network device.

In the second example, if there are no user-assigned link parameters for the display device, the storage device, or the network device, then the usage pattern analysis circuitry 206 performs usage trend analysis by examining, for example, a user's calendar to determine meeting times and behavioral usage. Based on the usage pattern of the compute device 100, the usage pattern analysis circuitry 206 determines a dependency graph for the compute device 100 to be the display device, the storage device, and the network device (e.g., display device → storage device → network device). Based on the dependency graph for the compute device 100, the usage pattern analysis circuitry 206 assigns link parameters to the display device, the storage device, and the network device.

In the second example, the priority management circuitry 208 examines the link parameters assigned to the display device, the storage device, and the network device by the OS analysis circuitry 204 and the usage pattern analysis circuitry 206. Additionally, the priority management circuitry 208 overrides the link parameter assigned to the display device, the storage device, and the network device during the duration of meeting and changes the dependency graph for the compute device 100 to the network device, the display device, and the storage device (e.g., network device → display device → storage device). Based on the dynamic link parameters assigned to the display device, the storage device, and the network device, the scheduler circuitry 212 determines (e.g., computes) the link parameters (e.g., bandwidth) for the display device, the storage device, and the network device.

For example, the scheduler circuitry 212 treats I/O transactions including the network device with higher priority than I/O transactions including the display device and I/O transaction including the display device with higher priority than I/O transactions including the storage device. As such, the scheduler circuitry 212 allocates more bandwidth to the network device than to the display device and more bandwidth to the display device than to the storage device. In the second example, after the usage of the network is complete, the priority management circuitry 208 restores the dependency graph for the compute device 100 to the display device, the storage device, and the network device (e.g., display device → storage device → network device), updates the dynamic link parameters for the devices, and sends the dynamic link parameters for the devices to the scheduler circuitry 212.

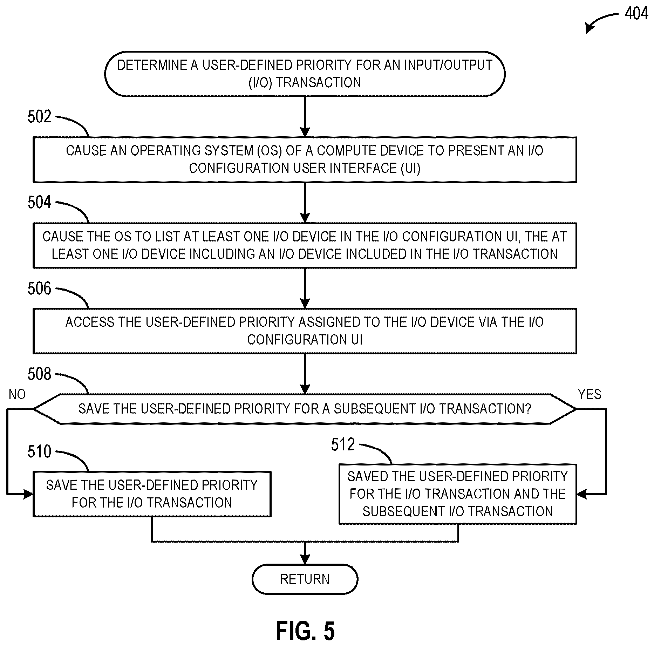

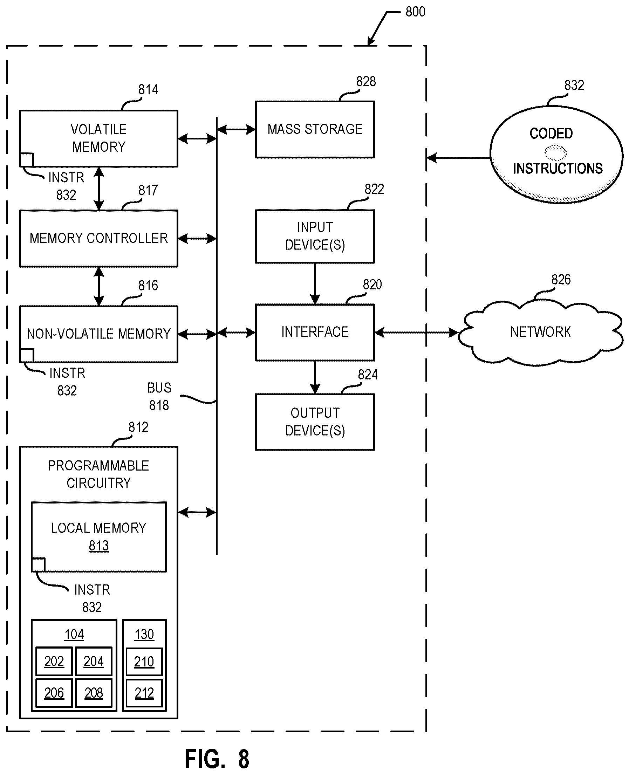

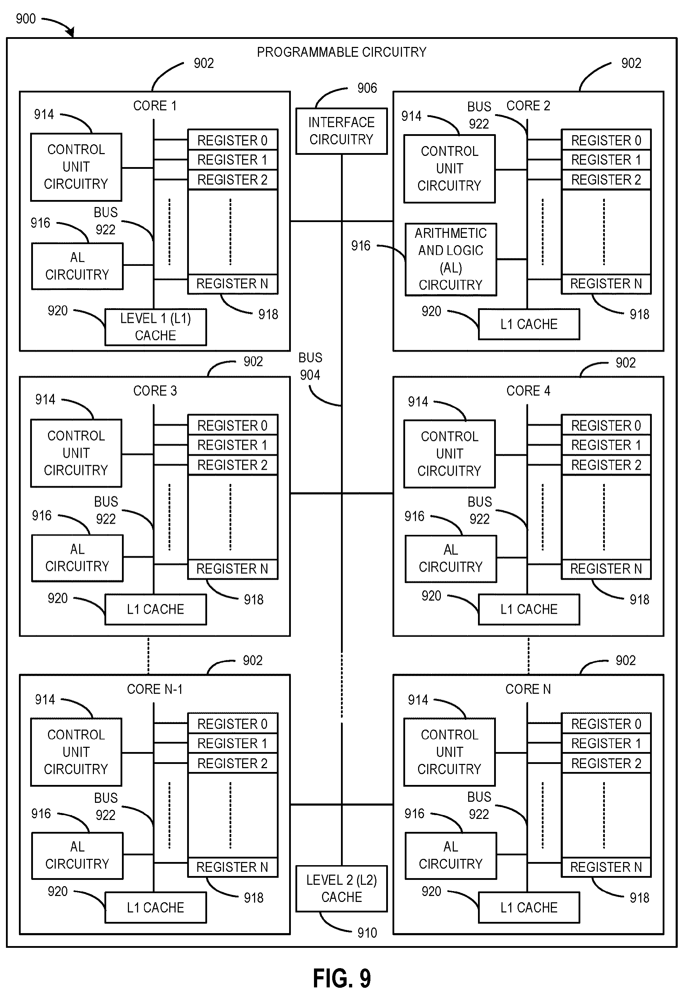

Returning to FIG. 2, in some examples, the user configuration control circuitry 202 is instantiated by programmable circuitry executing user configuration control instructions and/or configured to perform operations such as those represented by the flowchart(s) of FIGS. 4 and 5. Also, in some examples, the DIPP circuitry 104 includes means for causing presentation of a user interface. For example, the means for causing presentation may be implemented by the user configuration control circuitry 202. In some examples, the user configuration control circuitry 202 may be instantiated by programmable circuitry such as the example programmable circuitry 812 of FIG. 8. For instance, the user configuration control circuitry 202 may be instantiated by the example microprocessor 900 of FIG. 9 executing machine-executable instructions such as those implemented by at least block 404 of FIG. 4 and/or at least blocks 502, 504, 506, 508, 510, and 512 of FIG. 5.

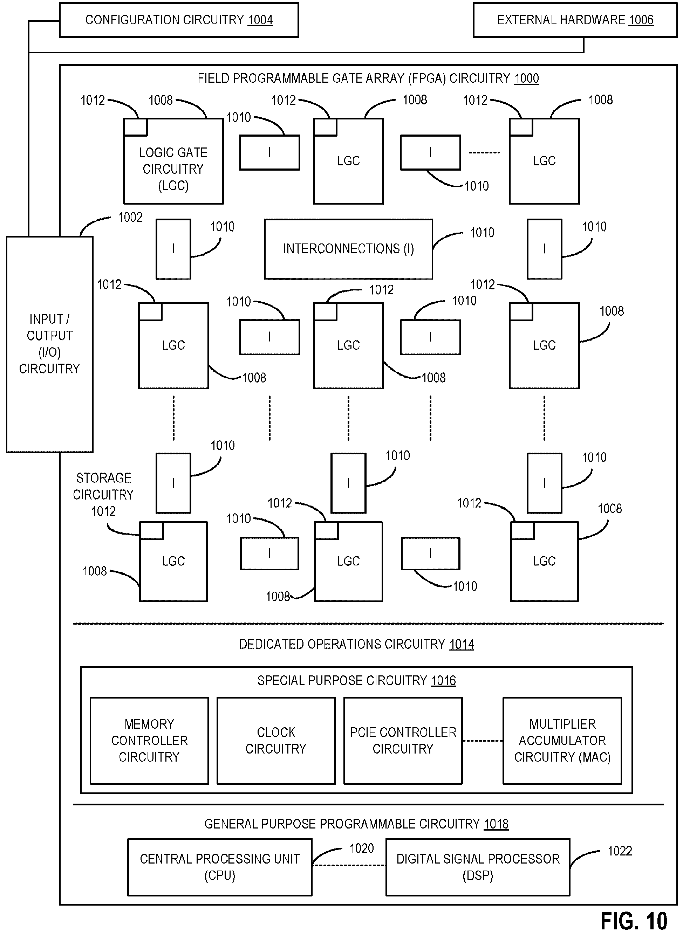

In some examples, the user configuration control circuitry 202 may be instantiated by hardware logic circuitry, which may be implemented by an ASIC, XPU, or the FPGA circuitry 1000 of FIG. 10 configured and/or structured to perform operations corresponding to the machine-readable instructions. Additionally or alternatively, the user configuration control circuitry 202 may be instantiated by any other combination of hardware, software, and/or firmware. For example, the user configuration control circuitry 202 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

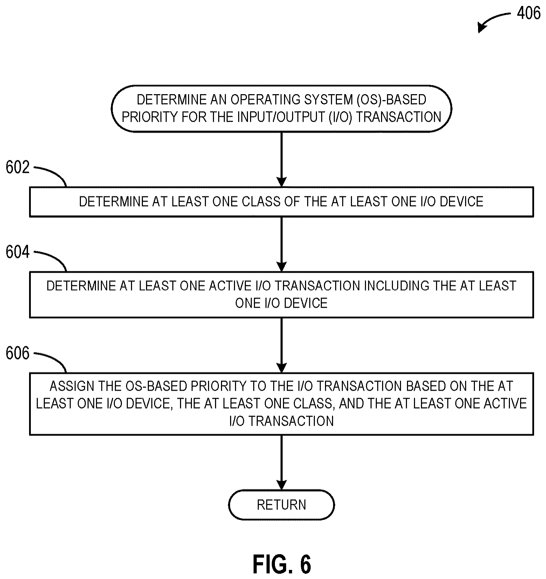

In some examples, the OS analysis circuitry 204 is instantiated by programmable circuitry executing OS analysis instructions and/or configured to perform operations such as those represented by the flowchart(s) of FIGS. 4 and 6. Also, in some examples, the DIPP circuitry 104 includes means for analyzing a device. For example, the means for analyzing may be implemented by the OS analysis circuitry 204. In some examples, the OS analysis circuitry 204 may be instantiated by programmable circuitry such as the example programmable circuitry 812 of FIG. 8. For instance, the OS analysis circuitry 204 may be instantiated by the example microprocessor 900 of FIG. 9 executing machine-executable instructions such as those implemented by at least block 406 of FIG. 4 and/or at least blocks 602, 604, and 606 of FIG. 6.

In some examples, the OS analysis circuitry 204 may be instantiated by hardware logic circuitry, which may be implemented by an ASIC, XPU, or the FPGA circuitry 1000 of FIG. 10 configured and/or structured to perform operations corresponding to the machine-readable instructions. Additionally or alternatively, the OS analysis circuitry 204 may be instantiated by any other combination of hardware, software, and/or firmware. For example, the OS analysis circuitry 204 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

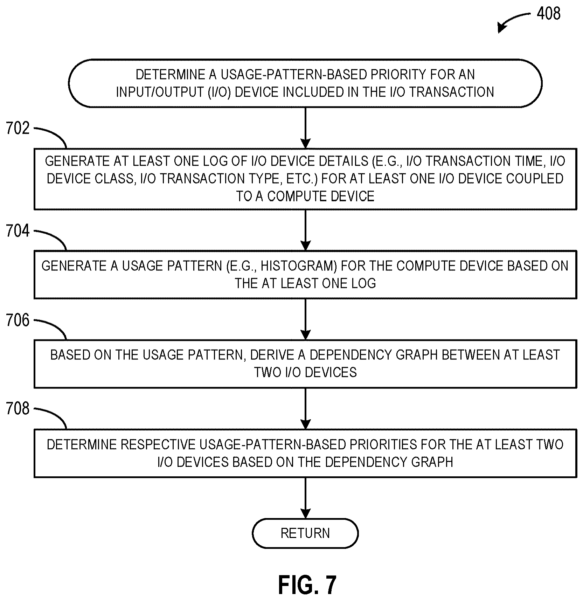

In some examples, the usage pattern analysis circuitry 206 is instantiated by programmable circuitry executing usage pattern analysis instructions and/or configured to perform operations such as those represented by the flowchart(s) of FIGS. 4 and 7. Also, in some examples, the DIPP circuitry 104 includes means for determining a usage pattern of a device. For example, the means for determining may be implemented by the usage pattern analysis circuitry 206. In some examples, the usage pattern analysis circuitry 206 may be instantiated by programmable circuitry such as the example programmable circuitry 812 of FIG. 8. For instance, the usage pattern analysis circuitry 206 may be instantiated by the example microprocessor 900 of FIG. 9 executing machine-executable instructions such as those implemented by at least block 408 of FIG. 4 and/or at least blocks 702, 704, 706, and 708 of FIG. 7.

In some examples, the usage pattern analysis circuitry 206 may be instantiated by hardware logic circuitry, which may be implemented by an ASIC, XPU, or the FPGA circuitry 1000 of FIG. 10 configured and/or structured to perform operations corresponding to the machine-readable instructions. Additionally or alternatively, the usage pattern analysis circuitry 206 may be instantiated by any other combination of hardware, software, and/or firmware. For example, the usage pattern analysis circuitry 206 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

In some examples, the priority management circuitry 208 is instantiated by programmable circuitry executing priority management instructions and/or configured to perform operations such as those represented by the flowchart(s) of FIG. 4. Also, in some examples, the DIPP circuitry 104 includes means for managing priorities of I/O transactions. For example, the means for managing may be implemented by the priority management circuitry 208. In some examples, the priority management circuitry 208 may be instantiated by programmable circuitry such as the example programmable circuitry 812 of FIG. 8. For instance, the priority management circuitry 208 may be instantiated by the example microprocessor 900 of FIG. 9 executing machine-executable instructions such as those implemented by at least blocks 410, 412, 414, and 416 of FIG. 4.

In some examples, the priority management circuitry 208 may be instantiated by hardware logic circuitry, which may be implemented by an ASIC, XPU, or the FPGA circuitry 1000 of FIG. 10 configured and/or structured to perform operations corresponding to the machine-readable instructions. Additionally or alternatively, the priority management circuitry 208 may be instantiated by any other combination of hardware, software, and/or firmware. For example, the priority management circuitry 208 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate. In some examples, the priority management circuitry 208 is referred to as parameter management circuitry.

In some examples, the I/O enumeration circuitry 210 is instantiated by programmable circuitry executing device discovery instructions and/or configured to perform operations such as those represented by the flowchart(s) of FIG. 4. Also, in some examples, the I/O circuitry 130 includes means for discovering a device. For example, the means for discovering may be implemented by the I/O enumeration circuitry 210. In some examples, the I/O enumeration circuitry 210 may be instantiated by programmable circuitry such as the example programmable circuitry 812 of FIG. 8. For instance, the I/O enumeration circuitry 210 may be instantiated by the example microprocessor 900 of FIG. 9 executing machine-executable instructions such as those implemented by at least block 402 of FIG. 4.

In some examples, the I/O enumeration circuitry 210 may be instantiated by hardware logic circuitry, which may be implemented by an ASIC, XPU, or the FPGA circuitry 1000 of FIG. 10 configured and/or structured to perform operations corresponding to the machine-readable instructions. Additionally or alternatively, the I/O enumeration circuitry 210 may be instantiated by any other combination of hardware, software, and/or firmware. For example, the I/O enumeration circuitry 210 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

In some examples, the scheduler circuitry 212 is instantiated by programmable circuitry executing scheduling instructions and/or configured to perform operations such as those represented by the flowchart(s) of FIG. 4. Also, in some examples, the I/O circuitry 130 includes means for scheduling an I/O transaction. For example, the means for scheduling may be implemented by the scheduler circuitry 212. In some examples, the scheduler circuitry 212 may be instantiated by programmable circuitry such as the example programmable circuitry 812 of FIG. 8. For instance, the scheduler circuitry 212 may be instantiated by the example microprocessor 900 of FIG. 9 executing machine-executable instructions such as those implemented by at least blocks 418 and 420 of FIG. 4.

In some examples, the scheduler circuitry 212 may be instantiated by hardware logic circuitry, which may be implemented by an ASIC, XPU, or the FPGA circuitry 1000 of FIG. 10, configured and/or structured to perform operations corresponding to the machine-readable instructions. Additionally or alternatively, the scheduler circuitry 212 may be instantiated by any other combination of hardware, software, and/or firmware. For example, the scheduler circuitry 212 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

While an example manner of implementing the DIPP circuitry 104 of FIG. 1 and an example manner of implementing the I/O circuitry 130 of FIG. 1 is illustrated in FIG. 2, one or more of the elements, processes, and/or devices illustrated in FIG. 2 may be combined, divided, re-arranged, omitted, eliminated, and/or implemented in any other way. Further, the example user configuration control circuitry 202, the example OS analysis circuitry 204, the example usage pattern analysis circuitry 206, the example priority management circuitry 208, and/or, more generally, the example DIPP circuitry 104 of FIG. 2 and/or the example I/O enumeration circuitry 210, the example scheduler circuitry 212, and/or, more generally, the example I/O circuitry 130 of FIG. 2, may be implemented by hardware alone or by hardware in combination with software and/or firmware. Thus, for example, any of the example user configuration control circuitry 202, the example OS analysis circuitry 204, the example usage pattern analysis circuitry 206, the example priority management circuitry 208, and/or, more generally, the example DIPP circuitry 104 of FIG. 2 and/or the example I/O enumeration circuitry 210, the example scheduler circuitry 212, and/or, more generally, the example I/O circuitry 130 of FIG. 2, could be implemented by programmable circuitry in combination with machine-readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example DIPP circuitry 104 of FIG. 2 and/or the I/O circuitry 130 of FIG. 2 may include one or more elements, processes, and/or devices in addition to, or instead of, those illustrated in FIG. 2, and/or may include more than one of any or all of the illustrated elements, processes and devices.

Flowchart(s) representative of example machine-readable instructions, which may be executed by programmable circuitry to implement and/or instantiate the DIPP circuitry 104 of FIG. 2 and/or the I/O circuitry 130 of FIG. 2 and/or representative of example operations which may be performed by programmable circuitry to implement and/or instantiate the DIPP circuitry 104 of FIG. 2 and/or the I/O circuitry 130 of FIG. 2, are shown in FIGS. 4, 5, 6, and/or 7. The machine-readable instructions may be one or more executable programs or portion(s) of one or more executable programs for execution by programmable circuitry such as the programmable circuitry 812 shown in the example programmable circuitry platform 800 discussed below in connection with FIG. 8 and/or may be one or more function(s) or portion(s) of functions to be performed by the example programmable circuitry (e.g., an FPGA) discussed below in connection with FIGS. 9 and/or 10. In some examples, the machine-readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer-readable and/or machine-readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer-readable and/or machine-readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine-readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer-readable storage medium may include one or more mediums. Further, although the example program is described with reference to the flowchart(s) illustrated in FIGS. 4, 5, 6, and/or 7, many other methods of implementing the example DIPP circuitry 104 of FIG. 2 and/or the I/O circuitry 130 of FIG. 2 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine-readable instructions described herein may be stored in one or more of a compressed format, an encrypted format, a fragmented format, a compiled format, an executable format, a packaged format, etc. Machine-readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine-executable instructions. For example, the machine-readable instructions may be fragmented and stored on one or more storage devices, disks, and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine-readable instructions may be stored in multiple parts, which are individually compressed, encrypted, and/or stored on separate computing devices, wherein the parts when decrypted, decompressed, and/or combined form a set of computer-executable and/or machine-executable instructions that implement one or more functions and/or operations that may together form a program such as that described herein.

In another example, the machine-readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine-readable instructions may need to be configured (e.g., settings stored, data input, network addresses recorded, etc.) before the machine-readable instructions and/or the corresponding program(s) can be executed in whole or in part. Thus, machine-readable, computer-readable, and/or machine-readable media, as used herein, may include instructions and/or program(s) regardless of the particular format or state of the machine-readable instructions and/or program(s).

The machine-readable instructions described herein can be represented by any past, present, or future instruction language, scripting language, programming language, etc. For example, the machine-readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 4, 5, 6, and/or 7 may be implemented using executable instructions (e.g., computer-readable and/or machine-readable instructions) stored on one or more non-transitory computer-readable and/or machine-readable media. As used herein, the terms non-transitory computer-readable medium, non-transitory computer-readable storage medium, non-transitory machine-readable medium, and/or non-transitory machine-readable storage medium are expressly defined to include any type of computer-readable storage device and/or storage disk and to exclude propagating signals and to exclude transmission media. Examples of such non-transitory computer-readable medium, non-transitory computer-readable storage medium, non-transitory machine-readable medium, and/or non-transitory machine-readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer-readable storage device" and "non-transitory machine-readable storage device" are defined to include any physical (mechanical, magnetic, and/or electrical) hardware to retain information for a time period, but to exclude propagating signals and to exclude transmission media. Examples of non-transitory computer-readable storage devices and/ or non-transitory machine-readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer-readable instructions, machine-readable instructions, etc., and/or manufactured to execute computer-readable instructions, machine-readable instructions, etc.

FIG. 4 is a flowchart representative of example machine-readable instructions and/or example operations 400 that may be executed, instantiated, and/or performed by example programmable circuitry to implement the DIPP circuitry 104 of FIG. 2 and the I/O circuitry 130 of FIG. 2. The example machine-readable instructions and/or the example operations 400 of FIG. 4 begin at block 402, at which the I/O enumeration circuitry 210 determines at least one I/O device coupled to a compute device (e.g., the programmable circuit die 102 and/or the compute device 100). At block 404, the user configuration control circuitry 202 determines a user-defined priority for an I/O transaction. For example, the user configuration control circuitry 202 determines the user-defined priority for the I/O transaction as described in connection with FIG. 5 herein.

In the illustrated example of FIG. 4, at block 406, the OS analysis circuitry 204 determines an OS-based priority for the I/O transaction. For example, the OS analysis circuitry 204 determines the OS-based priority for the I/O transaction as described in connection with FIG. 6 herein. At block 408, the usage pattern analysis circuitry 206 determines a usage-pattern-based priority for an I/O device included in the I/O transaction. For example, the usage pattern analysis circuitry 206 determines the usage-pattern-based priority for the I/O device included in the I/O transaction as described in connection with FIG. 7 herein.

In the illustrated example of FIG. 4, at block 410, the priority management circuitry 208 determines a burden on the compute device to complete the I/O transaction. For example, the priority management circuitry 208 communicates with I/O software of the compute device to access a size of data to be transferred via the I/O transaction, a time at which the I/O transaction is scheduled to be started, and/or an amount of power required to complete the I/O transaction. Based on the information accessed from the I/O software of the compute device, the priority management circuitry 208 determines a computational burden required to complete the I/O transaction, an amount of power required to complete the I/O transaction, and/or a bandwidth required to complete the I/O transaction.

In the illustrated example of FIG. 4, at block 412, the priority management circuitry 208 determines a status of the compute device. For example, the priority management circuitry 208 determines available processor resources at the compute device, available networking resources at the compute device, available memory resources at the compute device, an amount of power available at the compute device, and/or an amount of bandwidth available to be utilized for one or more I/O transactions. In the example of FIG. 4, at block 414, the priority management circuitry 208 evaluates a first change to a QoS of the compute device and a second change to a performance of the compute device based on at least one of the status of the compute device, the burden on the compute device to complete the I/O transaction, the user-defined priority, the OS-based priority, or the usage-pattern-based priority.

In the illustrated example of FIG. 4, at block 416, the priority management circuitry 208 determines a dynamic priority to assign to the I/O transaction based on the first change and the second change. After setting the dynamic priority for the I/O transaction, the priority management circuitry 208 sends the dynamic priority and the I/O transaction to the scheduler circuitry 212. In this manner, the priority management circuitry 208 causes the scheduler circuitry 212 (e.g., is to cause interface circuitry) to, based on the dynamic priority, adjust at least one of a default bandwidth to be allocated to the I/O transaction or a latency associated with the I/O transaction.

In the illustrated example of FIG. 4, the priority management circuitry 208 determines the dynamic priority for the I/O transaction with respect to other concurrent I/O transactions. Additionally or alternatively, the priority management circuitry 208 determines the dynamic priority for the I/O transaction with respect to other connected I/O devices. For example, if the usage pattern of the compute device 100 indicates that an isochronous class device (e.g., a monitor) connected to the compute device 100 is not active, then the priority management circuitry 208 can prioritize a non-isochronous transaction over isochronous transactions. Additionally or alternatively, if the usage pattern of the compute device 100 indicates that an isochronous transaction (e.g., a display-related transaction) is small in size, then the priority management circuitry 208 can prioritize a non-isochronous transactions over the isochronous transaction. That is, the priority management circuitry 208 can set the dynamic priorities for the non-isochronous transaction and the isochronous transaction such that the scheduler circuitry 212 increases a first default bandwidth to be allocated to the non-isochronous transaction and decreases a second default bandwidth to be allocated to the isochronous transaction at block 420 as described below.

In some examples, if the usage pattern of the compute device 100 indicates that a first application has a low tolerance for I/O calibration and a second application is tolerant of I/O calibration, then the priority management circuitry 208 can prioritize I/O transactions associated with the first application over I/O transactions associated with the second application. For example, the priority management circuitry 208 can set dynamic priorities for a first I/O transaction associated with the first application and a second I/O transaction associated with the second application such that the scheduler circuitry 212 adjusts latencies associated with the first I/O transaction and the second I/O transaction. That is, the scheduler circuitry 212 can adjust a first time at which the first I/O transaction is to start such that the first I/O transaction starts before the second I/O transaction at block 420 as described below.

In the illustrated example of FIG. 4, after determining a dynamic priority for the I/O transaction, the priority management circuitry 208 applies the dynamic priority to the I/O transaction. For example, the priority management circuitry 208 edits metadata (e.g., a header) of the I/O transaction to adjust a default priority for the I/O transaction to the dynamic priority computed by the priority management circuitry 208. In the example of FIG. 4, at block 418, the scheduler circuitry 212 determines a link priority for the I/O transaction based on the dynamic priority assigned by the priority management circuitry 208.

For example, the scheduler circuitry 212 accesses the dynamic priority assigned by the priority management circuitry 208, the size of data to be communicated via the I/O transaction, time required to perform the I/O transaction, and power required to perform the I/O transaction. In some examples, the scheduler circuitry 212 utilizes the dynamic priority assigned by the priority management circuitry 208 as the link priority for the I/O transaction. Additionally or alternatively, the scheduler circuitry 212 overwrites the dynamic priority set by the priority management circuitry 208.

For example, if power available at the compute device 100 is less than a threshold amount of power, then the scheduler circuitry 212 can override the dynamic priority (e.g., set based on a user-assigned priority) to deprioritize the I/O transaction in favor of another I/O transaction. In some examples, the scheduler circuitry 212 can override the dynamic priority to deprioritize the I/O transaction in favor of another I/O transaction that will conserve more power than the I/O transaction. As such, the scheduler circuitry 212 reduces power consumption of the compute device 100. Also, for example, if size of the data to be communicated via the I/O transaction is above a threshold amount of data, then the scheduler circuitry 212 can override the dynamic priority (e.g., set based on a user-assigned priority) to deprioritize the I/O transaction and expedite other I/O transactions that have smaller payloads.

In the illustrated example of FIG. 4, at block 420, the scheduler circuitry 212 adjusts at least one of a default bandwidth to be allocated to the I/O transaction or a latency associated with the I/O transaction based on the link priority. For example, based on the link priorities for concurrent I/O transactions (e.g., set at block 418), the scheduler circuitry 212 can increase a first default bandwidth to be allocated to a first type of I/O transaction (e.g., a non-isochronous transaction) and decrease a second default bandwidth to be allocated to a second type of I/O transaction (e.g., an isochronous transaction). In some examples, the scheduler circuitry 212 maintains a memory to store information about past link priorities assigned to I/O transactions (e.g., intelligence data) that can be used by the scheduler circuitry 212 when determining future link priorities. In this manner, the scheduler circuitry 212 can intelligently learn from usage scenarios, performance, and status of the compute device 100 over time. In some examples, the scheduler circuitry 212, and/or, more generally, the I/O circuitry 130 is referred to as interface circuitry.

FIG. 5 is a flowchart representative of example machine-readable instructions and/or example operations 404 that may be executed, instantiated, and/or performed by example programmable circuitry to implement the user configuration control circuitry 202 of FIG. 2. The example machine-readable instructions and/or the example operations 404 of FIG. 5 begin at block 502, at which the user configuration control circuitry 202 causes an OS of a compute device to present an I/O configuration UI. For example, the user configuration control circuitry 202 causes the OS of the compute device 100 to present the I/O configuration UI on a display coupled to the compute device 100.

In the illustrated example of FIG. 5, at block 504, the user configuration control circuitry 202 causes the OS to list at least one I/O device in the I/O configuration UI. For example, the at least one I/O device listed in the I/O configuration UI is currently in use by a user (e.g., coupled to the compute device 100). In the example of FIG. 5, the at least one I/O device listed in the I/O configuration UI includes an I/O device included in the I/O transaction processed in connection with the machine-readable instructions and/or the operations 400 of FIG. 4. At block 506, the user configuration control circuitry 202 accesses a user-defined priority assigned to the I/O device via the I/O configuration UI. In some examples, the user configuration control circuitry 202 also accesses a device class assigned to the I/O device by a user via the I/O configuration UI.

In this manner, a user can overwrite default link parameters (e.g., priorities) of I/O devices based on the preferences of the user (e.g., to prioritize a storage device during a backup operation). At block 508, the user configuration control circuitry 202 determines whether to save the user-defined priority for a subsequent I/O transaction. Based on (e.g., in response to) the user configuration control circuitry 202 determining not to save the user-defined priority for a subsequent I/O transaction (block 508: NO), the machine-readable instructions and/or the operations 404 proceed to block 510.

In the illustrated example of FIG. 5, at block 510, the user configuration control circuitry 202 saves the user-defined priority for the I/O transaction processed in connection with the machine-readable instructions and/or the operations 400 of FIG. 4. Based on (e.g., in response to) the user configuration control circuitry 202 determining to save the user-defined priority for a subsequent I/O transaction (block 508: YES), the machine-readable instructions and/or the operations 404 proceed to block 512. At block 512, the user configuration control circuitry 202 saves the user-defined priority for the I/O transaction processed in connection with the machine-readable instructions and/or the operations 400 of FIG. 4 and the subsequent I/O transaction.

FIG. 6 is a flowchart representative of example machine-readable instructions and/or example operations 406 that may be executed, instantiated, and/or performed by example programmable circuitry to implement the OS analysis circuitry 204 of FIG. 2. The example machine-readable instructions and/or the example operations 406 of FIG. 6 begin at block 602, at which the OS analysis circuitry 204 determines at least one class of at least one I/O device coupled to a compute device. In some examples, the OS analysis circuitry 204 also determines traffic class of and/or an I/O transaction type of an I/O transaction to be transmitted.

In the illustrated example of FIG. 6, the OS analysis circuitry 204 interfaces with the OS of the compute device 100 (e.g., the I/O enumeration circuitry 210) to determine device class information for at least one I/O device coupled to the compute device 100. Example device classes include a video class device, a storage class device, a network class device, and an audio class device, among others. In the example of FIG. 6, at block 604, the OS analysis circuitry 204 determines at least one active I/O transaction including the at least one I/O device.

For example, the OS analysis circuitry 204 interfaces with an OS of the compute device to determine if a driver associated with any other I/O devices is active or asleep. If a driver associated with an I/O device is asleep (e.g., inactive), the link parameter for (e.g., priority assigned to) the I/O device can be reduced. In the example of FIG. 6, at block 606, the OS analysis circuitry 204 assigns an OS-based priority to the I/O transaction based on the at least one I/O device, the at least one class, and the at least one active I/O transaction. In this manner, the OS analysis circuitry 204 assigns link parameters (e.g., priorities) based on device class (e.g., type) and associated device class attributes as described above.

FIG. 7 is a flowchart representative of example machine-readable instructions and/or example operations 408 that may be executed, instantiated, and/or performed by example programmable circuitry to implement the usage pattern analysis circuitry 206 of FIG. 2. The example machine-readable instructions and/or the example operations 408 of FIG. 7 begin at block 702, at which the usage pattern analysis circuitry 206 generates at least one log of I/O device details for at least one I/O device coupled to a compute device. Example I/O device details include whether more than one I/O device is concurrently in communication with (e.g., coupled to) the compute device, at least one application (e.g., foreground, background, etc.) executed by the compute device, and at least one device class of at least I/O device in communication with the compute device.

In the illustrated example of FIG. 7, example I/O device details also include at least one task queue associated with the at least one I/O device and/or the at least one application, a duration of usage of the at least one I/O device, and a time of usage of the at least one I/O device. Additionally, example I/O device details include a size of data to be communicated via an I/O transaction, a transaction type of the I/O transaction, a time at which the I/O transaction is to be initiated, and a performance characteristic (e.g., available power, available bandwidth, etc.) of the compute device. In the example of FIG. 7, at block 704, the usage pattern analysis circuitry 206 generates a usage pattern (e.g., a histogram) for the compute device based on the at least one log generated at block 702.

In the illustrated example of FIG. 7, at block 706, based on the usage pattern, the usage pattern analysis circuitry 206 derives a dependency graph between at least two I/O devices in communication with the compute device. At block 708, the usage pattern analysis circuitry 206 determines respective usage-pattern-based priorities for the at least two I/O devices based on the dependency graph. As described in FIG. 7, the usage pattern analysis circuitry 206 can analyze packets of I/O transactions and build a histogram profile for a compute device that details the frequency and direction of data transfers arbitrated across different devices. Based on the histogram profile, the usage pattern analysis circuitry 206 derives a dependency graph for the current profiling session and determines QoS link parameters (e.g., adjusted for efficient routing and QoS profile management).

Additionally, as described above, the OS analysis circuitry 204 and the usage pattern analysis circuitry 206 assign link parameters to an I/O transaction in addition to the link parameter assigned to the I/O transaction via the UI provided based on at least one instructions from the user configuration control circuitry 202. In some examples, the usage pattern analysis circuitry 206 implements AI to perform usage patterning of the compute device 100, the programmable circuit die 102, and/or one or more I/O devices. For example, AI models could be gradient-based, clustering-based, or large language model (LLM) based models. An LLM-based model.

FIG. 8 is a block diagram of an example programmable circuitry platform 800 structured to execute and/or instantiate the example machine-readable instructions and/or the example operations of FIGS. 4, 5, 6, and/or 7 to implement the DIPP circuitry 104 of FIG. 2 and the I/O circuitry 130 of FIG. 2. The programmable circuitry platform 800 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 800 of the illustrated example includes programmable circuitry 812. The programmable circuitry 812 of the illustrated example is hardware. For example, the programmable circuitry 812 can be implemented by one or more integrated circuits, logic circuits, FPGAs, microprocessors, CPUs, GPUs, DSPs, and/or microcontrollers from any desired family or manufacturer. The programmable circuitry 812 may be implemented by one or more semiconductor based (e.g., silicon based) devices. In this example, the programmable circuitry 812 implements the example user configuration control circuitry 202, the example OS analysis circuitry 204, the example usage pattern analysis circuitry 206, the example priority management circuitry 208, and/or, more generally, the example DIPP circuitry 104 of FIG. 2 and/or the example I/O enumeration circuitry 210, the example scheduler circuitry 212, and/or, more generally, the example I/O circuitry 130 of FIG. 2.

The programmable circuitry 812 of the illustrated example includes a local memory 813 (e.g., a cache, registers, etc.). The programmable circuitry 812 of the illustrated example is in communication with main memory 814, 816, which includes a volatile memory 814 and a non-volatile memory 816, by a bus 818. The volatile memory 814 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 816 may be implemented by flash memory and/or any other desired type of memory device. Access to the main memory 814, 816 of the illustrated example is controlled by a memory controller 817. In some examples, the memory controller 817 may be implemented by one or more integrated circuits, logic circuits, microcontrollers from any desired family or manufacturer, or any other type of circuitry to manage the flow of data going to and from the main memory 814, 816.

The programmable circuitry platform 800 of the illustrated example also includes interface circuitry 820. The interface circuitry 820 may be implemented by hardware in accordance with any type of interface standard, such as an Ethernet interface, a USB^{®} interface, a Bluetooth^{®} interface, a near field communication (NFC) interface, a PCI^{®} interface, and/or a PCIe^{®} interface.

In the illustrated example, one or more input devices 822 are connected to the interface circuitry 820. The input device(s) 822 permit(s) a user (e.g., a human user, a machine user, etc.) to enter data and/or commands into the programmable circuitry 812. The input device(s) 822 can be implemented by, for example, an audio sensor, a microphone, a camera (still or video), a keyboard, a button, a mouse, a touchscreen, a trackpad, a trackball, an isopoint device, and/or a voice recognition system.

One or more output devices 824 are also connected to the interface circuitry 820 of the illustrated example. The output device(s) 824 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 820 of the illustrated example, thus, typically includes a graphics driver card, a graphics driver chip, and/or graphics processor circuitry such as a GPU.

The interface circuitry 820 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 826. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 800 of the illustrated example also includes one or more mass storage discs or devices 828 to store firmware, software, and/or data. Examples of such mass storage discs or devices 828 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine-readable instructions 832, which may be implemented by the machine-readable instructions of FIGS. 4, 5, 6, and/or 7, may be stored in the mass storage device 828, in the volatile memory 814, in the non-volatile memory 816, and/or on at least one non-transitory computer-readable storage medium such as a CD or DVD which may be removable.

FIG. 9 is a block diagram of an example implementation of the programmable circuitry 812 of FIG. 8. In this example, the programmable circuitry 812 of FIG. 8 is implemented by a microprocessor 900. For example, the microprocessor 900 may be a general-purpose microprocessor (e.g., general-purpose microprocessor circuitry). The microprocessor 900 executes some or all of the machine-readable instructions of the flowcharts of FIGS. 4, 5, 6, and/or 7 to effectively instantiate the circuitry of FIG. 2 as logic circuits to perform operations corresponding to those machine-readable instructions. In some such examples, the circuitry of FIG. 2 is instantiated by the hardware circuits of the microprocessor 900 in combination with the machine-readable instructions. For example, the microprocessor 900 may be implemented by multi-core hardware circuitry such as a CPU, a DSP, a GPU, an XPU, etc. Although it may include any number of example cores 902 (e.g., 1 core), the microprocessor 900 of this example is a multi-core semiconductor device including N cores. The cores 902 of the microprocessor 900 may operate independently or may cooperate to execute machine-readable instructions. For example, machine code corresponding to a firmware program, an embedded software program, or a software program may be executed by one of the cores 902 or may be executed by multiple ones of the cores 902 at the same or different times. In some examples, the machine code corresponding to the firmware program, the embedded software program, or the software program is split into threads and executed in parallel by two or more of the cores 902. The software program may correspond to a portion or all of the machine-readable instructions and/or operations represented by the flowcharts of FIGS. 4, 5, 6, and/or 7.

The cores 902 may communicate by a first example bus 904. In some examples, the first bus 904 may be implemented by a communication bus to effectuate communication associated with one(s) of the cores 902. For example, the first bus 904 may be implemented by at least one of an Inter-Integrated Circuit (I2C) bus, a Serial Peripheral Interface (SPI^{®}) bus, a PCI^{®} bus, or a PCIe^{®} bus. Additionally or alternatively, the first bus 904 may be implemented by any other type of computing or electrical bus. The cores 902 may obtain data, instructions, and/or signals from one or more external devices by example interface circuitry 906. The cores 902 may output data, instructions, and/or signals to the one or more external devices by the interface circuitry 906. Although the cores 902 of this example include example local memory 920 (e.g., Level 1 (L1) cache that may be split into an L1 data cache and an L1 instruction cache), the microprocessor 900 also includes example shared memory 910 that may be shared by the cores (e.g., Level 2 (L2 cache)) for high-speed access to data and/or instructions. Data and/or instructions may be transferred (e.g., shared) by writing to and/or reading from the shared memory 910. The local memory 920 of each of the cores 902 and the shared memory 910 may be part of a hierarchy of storage devices including multiple levels of cache memory and the main memory (e.g., the main memory 814, 816 of FIG. 8). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 902 may be referred to as a CPU, DSP, GPU, etc., or any other type of hardware circuitry. Each core 902 includes control unit circuitry 914, arithmetic and logic (AL) circuitry 916 (sometimes referred to as an ALU), a plurality of registers 918, the local memory 920, and a second example bus 922. Other structures may be present. For example, each core 902 may include vector unit circuitry, single instruction multiple data (SIMD) unit circuitry, load/store unit (LSU) circuitry, branch/jump unit circuitry, floating-point unit (FPU) circuitry, etc. The control unit circuitry 914 includes semiconductor-based circuits structured to control (e.g., coordinate) data movement within the corresponding core 902. The AL circuitry 916 includes semiconductor-based circuits structured to perform one or more mathematic and/or logic operations on the data within the corresponding core 902. The AL circuitry 916 of some examples performs integer-based operations. In other examples, the AL circuitry 916 also performs floating-point operations. In yet other examples, the AL circuitry 916 may include first AL circuitry that performs integer-based operations and second AL circuitry that performs floating-point operations. In some examples, the AL circuitry 916 may be referred to as an Arithmetic Logic Unit (ALU).

The registers 918 are semiconductor-based structures to store data and/or instructions such as results of one or more of the operations performed by the AL circuitry 916 of the corresponding core 902. For example, the registers 918 may include vector register(s), SIMD register(s), general-purpose register(s), flag register(s), segment register(s), machine-specific register(s), instruction pointer register(s), control register(s), debug register(s), memory management register(s), machine check register(s), etc. The registers 918 may be arranged in a bank as shown in FIG. 9. Alternatively, the registers 918 may be organized in any other arrangement, format, or structure, such as by being distributed throughout the core 902 to shorten access time. The second bus 922 may be implemented by at least one of an I2C bus, a SPI^{®} bus, a PCI^{®} bus, or a PCIe^{®} bus.

Each core 902 and/or, more generally, the microprocessor 900 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 900 is a semiconductor device fabricated to include many transistors interconnected to implement the structures described above in one or more integrated circuits (ICs) contained in one or more packages.

The microprocessor 900 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on board the microprocessor 900, in the same chip package as the microprocessor 900 and/or in one or more separate packages from the microprocessor 900.

FIG. 10 is a block diagram of another example implementation of the programmable circuitry 812 of FIG. 8. In this example, the programmable circuitry 812 is implemented by FPGA circuitry 1000. For example, the FPGA circuitry 1000 may be implemented by an FPGA. The FPGA circuitry 1000 can be used, for example, to perform operations that could otherwise be performed by the example microprocessor 900 of FIG. 9 executing corresponding machine-readable instructions. However, once configured, the FPGA circuitry 1000 instantiates the operations and/or functions corresponding to the machine-readable instructions in hardware and, thus, can often execute the operations/functions faster than they could be performed by a general-purpose microprocessor executing the corresponding software.

More specifically, in contrast to the microprocessor 900 of FIG. 9 described above (which is a general purpose device that may be programmed to execute some or all of the machine-readable instructions represented by the flowchart(s) of FIGS. 4, 5, 6, and/or 7 but whose interconnections and logic circuitry are fixed once fabricated), the FPGA circuitry 1000 of the example of FIG. 10 includes interconnections and logic circuitry that may be configured, structured, programmed, and/or interconnected in different ways after fabrication to instantiate, for example, some or all of the operations/functions corresponding to the machine-readable instructions represented by the flowchart(s) of FIGS. 4, 5, 6, and/or 7. In particular, the FPGA circuitry 1000 may be thought of as an array of logic gates, interconnections, and switches. The switches can be programmed to change how the logic gates are interconnected by the interconnections, effectively forming one or more dedicated logic circuits (unless and until the FPGA circuitry 1000 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 4, 5, 6, and/or 7. As such, the FPGA circuitry 1000 may be configured and/or structured to effectively instantiate some or all of the operations/functions corresponding to the machine-readable instructions of the flowchart(s) of FIGS. 4, 5, 6, and/or 7 as dedicated logic circuits to perform the operations/functions corresponding to those software instructions in a dedicated manner analogous to an ASIC. Therefore, the FPGA circuitry 1000 may perform the operations/functions corresponding to the some or all of the machine-readable instructions of FIGS. 4, 5, 6, and/or 7 faster than the general-purpose microprocessor can execute the same.

In the example of FIG. 10, the FPGA circuitry 1000 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1000 of FIG. 10 may access and/or load the binary file to cause the FPGA circuitry 1000 of FIG. 10 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1000 of FIG. 10 to cause configuration and/or structuring of the FPGA circuitry 1000 of FIG. 10, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1000 of FIG. 10 may access and/or load the binary file to cause the FPGA circuitry 1000 of FIG. 10 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1000 of FIG. 10 to cause configuration and/or structuring of the FPGA circuitry 1000 of FIG. 10, or portion(s) thereof.

The FPGA circuitry 1000 of FIG. 10, includes example input/output (I/O) circuitry 1002 to obtain and/or output data to/from example configuration circuitry 1004 and/or external hardware 1006. For example, the configuration circuitry 1004 may be implemented by interface circuitry that may obtain a binary file, which may be implemented by a bit stream, data, and/or machine-readable instructions, to configure the FPGA circuitry 1000, or portion(s) thereof. In some such examples, the configuration circuitry 1004 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1006 may be implemented by external hardware circuitry. For example, the external hardware 1006 may be implemented by the microprocessor 900 of FIG. 9.

The FPGA circuitry 1000 also includes an array of example logic gate circuitry 1008, a plurality of example configurable interconnections 1010, and example storage circuitry 1012. The logic gate circuitry 1008 and the configurable interconnections 1010 are configurable to instantiate one or more operations/functions that may correspond to at least some of the machine-readable instructions of FIGS. 4, 5, 6, and/or 7 and/or other desired operations. The logic gate circuitry 1008 shown in FIG. 10 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1008 to enable configuration of the electrical structures and/or the logic gates to form circuits to perform desired operations/functions. The logic gate circuitry 1008 may include other electrical structures such as look-up tables (LUTs), registers (e.g., flip-flops or latches), multiplexers, etc.

The configurable interconnections 1010 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1008 to program desired logic circuits.

The storage circuitry 1012 of the illustrated example is structured to store result(s) of the one or more of the operations performed by corresponding logic gates. The storage circuitry 1012 may be implemented by registers or the like. In the illustrated example, the storage circuitry 1012 is distributed amongst the logic gate circuitry 1008 to facilitate access and increase execution speed.

The example FPGA circuitry 1000 of FIG. 10 also includes example dedicated operations circuitry 1014. In this example, the dedicated operations circuitry 1014 includes special purpose circuitry 1016 that may be invoked to implement commonly used functions to avoid the need to program those functions in the field. Examples of such special purpose circuitry 1016 include memory (e.g., DRAM) controller circuitry, PCIe^{®} controller circuitry, clock circuitry, transceiver circuitry, memory, and multiplier-accumulator circuitry. Other types of special purpose circuitry may be present. In some examples, the FPGA circuitry 1000 may also include example general purpose programmable circuitry 1018 such as an example CPU 1020 and/or an example DSP 1022. Other general purpose programmable circuitry 1018 may additionally or alternatively be present such as a GPU, an XPU, etc., that can be programmed to perform other operations.

Although FIGS. 9 and 10 illustrate two example implementations of the programmable circuitry 812 of FIG. 8, many other approaches are contemplated. For example, FPGA circuitry may include an on-board CPU, such as one or more of the example CPU 1020 of FIG. 9. Therefore, the programmable circuitry 812 of FIG. 8 may additionally be implemented by combining at least the example microprocessor 900 of FIG. 9 and the example FPGA circuitry 1000 of FIG. 10. In some such hybrid examples, one or more cores 902 of FIG. 9 may execute a first portion of the machine-readable instructions represented by the flowchart(s) of FIGS. 4, 5, 6, and/or 7 to perform first operation(s)/function(s), the FPGA circuitry 1000 of FIG. 10 may be configured and/or structured to perform second operation(s)/function(s) corresponding to a second portion of the machine-readable instructions represented by the flowcharts of FIGS. 4, 5, 6, and/or 7, and/or an ASIC may be configured and/or structured to perform third operation(s)/function(s) corresponding to a third portion of the machine-readable instructions represented by the flowcharts of FIGS. 4, 5, 6, and/or 7.

It should be understood that some or all of the circuitry of FIG. 2 may, thus, be instantiated at the same or different times. For example, same and/or different portion(s) of the microprocessor 900 of FIG. 9 may be programmed to execute portion(s) of machine-readable instructions at the same and/or different times. In some examples, same and/or different portion(s) of the FPGA circuitry 1000 of FIG. 10 may be configured and/or structured to perform operations/functions corresponding to portion(s) of machine-readable instructions at the same and/or different times.

In some examples, some or all of the circuitry of FIG. 2 may be instantiated, for example, in one or more threads executing concurrently and/or in series. For example, the microprocessor 900 of FIG. 9 may execute machine-readable instructions in one or more threads executing concurrently and/or in series. In some examples, the FPGA circuitry 1000 of FIG. 10 may be configured and/or structured to carry out operations/functions concurrently and/or in series. Moreover, in some examples, some or all of the circuitry of FIG. 2 may be implemented within one or more virtual machines and/or containers executing on the microprocessor 900 of FIG. 9.

In some examples, the programmable circuitry 812 of FIG. 8 may be in one or more packages. For example, the microprocessor 900 of FIG. 9 and/or the FPGA circuitry 1000 of FIG. 10 may be in one or more packages. In some examples, an XPU may be implemented by the programmable circuitry 812 of FIG. 8, which may be in one or more packages. For example, the XPU may include a CPU (e.g., the microprocessor 900 of FIG. 9, the CPU 1020 of FIG. 10, etc.) in one package, a DSP (e.g., the DSP 1022 of FIG. 10) in another package, a GPU in yet another package, and an FPGA (e.g., the FPGA circuitry 1000 of FIG. 10) in still yet another package.

A block diagram illustrating an example software distribution platform 1105 to distribute software such as the example machine-readable instructions 832 of FIG. 8 to other hardware devices (e.g., hardware devices owned and/or operated by third parties from the owner and/or operator of the software distribution platform) is illustrated in FIG. 11. The example software distribution platform 1105 may be implemented by any computer server, data facility, cloud service, etc., capable of storing and transmitting software to other computing devices. The third parties may be customers of the entity owning and/or operating the software distribution platform 1105. For example, the entity that owns and/or operates the software distribution platform 1105 may be a developer, a seller, and/or a licensor of software such as the example machine-readable instructions 832 of FIG. 8. The third parties may be consumers, users, retailers, OEMs, etc., who purchase and/or license the software for use and/or re-sale and/or sub-licensing. In the illustrated example, the software distribution platform 1105 includes one or more servers and one or more storage devices. The storage devices store the machine-readable instructions 832, which may correspond to the example machine-readable instructions of FIGS. 4, 5, 6, and/or 7, as described above. The one or more servers of the example software distribution platform 1105 are in communication with an example network 1110, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third-party payment entity. The servers enable purchasers and/or licensors to download the machine-readable instructions 832 from the software distribution platform 1105. For example, the software, which may correspond to the example machine-readable instructions of FIGS. 4, 5, 6, and/or 7, may be downloaded to the example programmable circuitry platform 800, which is to execute the machine-readable instructions 832 to implement the DIPP circuitry 104 of FIG. 2 and the I/O circuitry 130 of FIG. 2. In some examples, one or more servers of the software distribution platform 1105 periodically offer, transmit, and/or force updates to the software (e.g., the example machine-readable instructions 832 of FIG. 8) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a," "an," "first," "second," etc.) do not exclude a plurality. The term "a" or "an" object, as used herein, refers to one or more of that object. The terms "a" (or "an"), "one or more," and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein "substantially real-time" refers to occurrence in a near instantaneous manner recognizing there may be real world delays for computing time, transmission, etc. Thus, unless otherwise specified, "substantially real-time" refers to real-time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example, an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that dynamically manage input/output transactions. For example, disclosed examples include dynamic I/O prediction and prioritization to dynamically manage I/O transfers for improved power, performance, and user-experience (e.g., QoS). Accordingly, examples systems, apparatus, articles of manufacture, and methods have been disclosed that improve the utilization of bandwidth of a communication interface, reduce power consumption of a compute device, and improve user-experience.

Disclosed systems, apparatus, articles of manufacture, and methods improve the efficiency of using a computing device by providing higher bandwidth to I/O transactions than a default bandwidth based on device class and usage and improving power savings in the computing device. Examples disclosed herein provide increased flexibility to a user to assign priorities to I/O devices and/or I/O transactions based on the user's preferences for specific I/O devices. As such, examples disclosed herein provide improved QoS and user experience. Disclosed systems, apparatus, articles of manufacture, and methods are accordingly directed to one or more improvement(s) in the operation of a machine such as a computer or other electronic and/or mechanical device.

Example methods, apparatus, systems, and articles of manufacture to dynamically manage input/output transactions are disclosed herein. Further examples and combinations thereof include the following:
Example 1 includes an apparatus comprising first circuitry to determine at least one of (1) a first parameter assigned to an input/output (I/O) transaction by a user, (2) a second parameter for the I/O transaction based on at least a class of an I/O device included in the I/O transaction, or (3) a third parameter for the I/O transaction based on a usage pattern for a compute device coupled to the I/O device, and parameter management circuitry to determine a dynamic parameter to assign to the I/O transaction based on at least one of the first parameter, the second parameter, or the third parameter, and cause scheduler circuitry to at least one of adjust a default bandwidth to be allocated to the I/O transaction based on the dynamic parameter or adjust a latency associated with the I/O transaction based on the dynamic parameter.
Example 2 includes the apparatus of example 1, wherein the first circuitry is to cause an operating system of the compute device to present an I/O configuration user interface (UI), and obtain the first parameter via the I/O configuration UI.
Example 3 includes the apparatus of any of examples 1 or 2, wherein the first circuitry is to determine at least one class of at least one I/O device coupled to the compute device, determine at least one active I/O transaction including the at least one I/O device, and assign the second parameter to the I/O transaction based on one or more of (1) the at least one class of the at least one I/O device or (2) the at least one active I/O transaction.
Example 4 includes the apparatus of any of examples 1, 2, or 3, wherein the I/O device is a first I/O device, and the first circuitry is to determine the usage pattern for the compute device based on at least one of (1) at least one second I/O device concurrently in communication with the compute device, (2) a task queue associated with the at least one second I/O device, (3) at least one application executed by the compute device, (4) a duration of usage of the at least one second I/O device, (5) a time of usage of the at least one second I/O device, (6) a size of data to be communicated via the I/O transaction, or (7) a performance characteristic of the compute device.
Example 5 includes the apparatus of any of examples 1, 2, 3, or 4, wherein the parameter management circuitry is to evaluate a first change to a quality of service of the compute device and a second change to a performance of the compute device based on at least one of a status of the compute device, a burden on the compute device, the first parameter, the second parameter, or the third parameter, and determine the dynamic parameter based on the first change and the second change.
Example 6 includes the apparatus of any of examples 1, 2, 3, 4, or 5, wherein the I/O transaction is a first I/O transaction, and the scheduler circuitry is to override the dynamic parameter assigned to the first I/O transaction to schedule a second I/O transaction based on the second I/O transaction conserving more power than the first I/O transaction.
Example 7 includes the apparatus of any of examples 1, 2, 3, 4, 5, or 6, wherein the I/O transaction is a first type of I/O transaction, the default bandwidth is a first default bandwidth, and the parameter management circuitry is to cause the scheduler circuitry to, based on the dynamic parameter increase the first default bandwidth to be allocated to the first type of I/O transaction, and decrease a second default bandwidth to be allocated to a second type of I/O transaction.
Example 8 includes the apparatus of example 7, wherein the first type of I/O transaction is a non-isochronous I/O transaction, and the second type of I/O transaction is an isochronous I/O transaction.
Example 9 includes the apparatus of any of examples 1, 2, 3, 4, 5, 6, 7, or 8, wherein the latency associated with the I/O transaction includes a time at which the I/O transaction is to start.
Example 10 includes an apparatus comprising interface circuitry, machine-readable instructions, and at least one processor circuit to be programmed by the machine-readable instructions to determine at least one of (1) a first parameter assigned to an input/output (I/O) transaction by a user, (2) a second parameter for the I/O transaction based on at least a class of an I/O device included in the I/O transaction, or (3) a third parameter for the I/O transaction based on a usage pattern for a compute device coupled to the I/O device, determine a dynamic parameter to assign to the I/O transaction based on at least one of the first parameter, the second parameter, or the third parameter, and cause the interface circuitry to at least one of adjust a default bandwidth to be allocated to the I/O transaction based on the dynamic parameter or adjust a latency associated with the I/O transaction based on the dynamic parameter.
Example 11 includes the apparatus of example 10, wherein one or more of the at least one processor circuit is to cause an operating system of the compute device to present an I/O configuration user interface (UI), and obtain the first parameter via the I/O configuration UI.
Example 12 includes the apparatus of any of examples 10 or 11, wherein one or more of the at least one processor circuit is to determine at least one class of at least one I/O device coupled to the compute device, determine at least one active I/O transaction including the at least one I/O device, and assign the second parameter to the I/O transaction based on one or more of (1) the at least one class of the at least one I/O device or (2) the at least one active I/O transaction.
Example 13 includes the apparatus of any of examples 10, 11, or 12, wherein the I/O device is a first I/O device, and one or more of the at least one processor circuit is to determine the usage pattern for the compute device based on at least one of (1) at least one second I/O device concurrently in communication with the compute device, (2) a task queue associated with the at least one second I/O device, (3) at least one application executed by the compute device, (4) a duration of usage of the at least one second I/O device, (5) a time of usage of the at least one second I/O device, (6) a size of data to be communicated via the I/O transaction, or (7) a performance characteristic of the compute device.
Example 14 includes the apparatus of any of examples 10, 11, 12, or 13, wherein one or more of the at least one processor circuit is to evaluate a first change to a quality of service of the compute device and a second change to a performance of the compute device based on at least one of a status of the compute device, a burden on the compute device, the first parameter, the second parameter, or the third parameter, and determine the dynamic parameter based on the first change and the second change.
Example 15 includes the apparatus of any of examples 10, 11, 12, 13, or 14, wherein the I/O transaction is a first I/O transaction, and the interface circuitry is to override the dynamic parameter assigned to the first I/O transaction to schedule a second I/O transaction based on the second I/O transaction conserving more power than the first I/O transaction.
Example 16 includes the apparatus of any of examples 10, 11, 12, 13, 14, or 15, wherein the I/O transaction is a first type of I/O transaction, the default bandwidth is a first default bandwidth, and one or more of the at least one processor circuit is to cause the interface circuitry to, based on the dynamic parameter increase the first default bandwidth to be allocated to the first type of I/O transaction, and decrease a second default bandwidth to be allocated to a second type of I/O transaction.
Example 17 includes the apparatus of example 16, wherein the first type of I/O transaction is a non-isochronous I/O transaction, and the second type of I/O transaction is an isochronous I/O transaction.
Example 18 includes the apparatus of any of examples 10, 11, 12, 13, 14, 15, 16, or 17, wherein the latency associated with the I/O transaction includes a time at which the I/O transaction is to start.
Example 19 includes a non-transitory computer-readable medium comprising instruction to cause at least one processor circuit to determine at least one of (1) a first parameter assigned to an input/output (I/O) transaction by a user, (2) a second parameter for the I/O transaction based on at least a class of an I/O device included in the I/O transaction, or (3) a third parameter for the I/O transaction based on a usage pattern for a compute device coupled to the I/O device, determine a dynamic parameter to assign to the I/O transaction based on at least one of the first parameter, the second parameter, or the third parameter, and cause interface circuitry to at least one of adjust a default bandwidth to be allocated to the I/O transaction based on the dynamic parameter or adjust a latency associated with the I/O transaction based on the dynamic parameter.
Example 20 includes the non-transitory computer-readable medium of example 19, wherein the instructions cause one or more of the at least one processor circuit to cause an operating system of the compute device to present an I/O configuration user interface (UI), and obtain the first parameter via the I/O configuration UI.
Example 21 includes the non-transitory computer-readable medium of any of examples 19 or 20, wherein the instructions cause one or more of the at least one processor circuit to determine at least one class of at least one I/O device coupled to the compute device, determine at least one active I/O transaction including the at least one I/O device, and assign the second parameter to the I/O transaction based on one or more of (1) the at least one class of the at least one I/O device or (2) the at least one active I/O transaction.
Example 22 includes the non-transitory computer-readable medium of any of examples 19, 20, or 21, wherein the I/O device is a first I/O device, and the instructions cause one or more of the at least one processor circuit to determine the usage pattern for the compute device based on at least one of (1) at least one second I/O device concurrently in communication with the compute device, (2) a task queue associated with the at least one second I/O device, (3) at least one application executed by the compute device, (4) a duration of usage of the at least one second I/O device, (5) a time of usage of the at least one second I/O device, (6) a size of data to be communicated via the I/O transaction, or (7) a performance characteristic of the compute device.
Example 23 includes the non-transitory computer-readable medium of any of examples 19, 20, 21, or 22, wherein the instructions cause one or more of the at least one processor circuit to evaluate a first change to a quality of service of the compute device and a second change to a performance of the compute device based on at least one of a status of the compute device, a burden on the compute device, the first parameter, the second parameter, or the third parameter, and determine the dynamic parameter based on the first change and the second change.
Example 24 includes the non-transitory computer-readable medium of any of examples 19, 20, 21, 22, or 23, wherein the I/O transaction is a first type of I/O transaction, the default bandwidth is a first default bandwidth, and the instructions cause one or more of the at least one processor circuit to cause the interface circuitry to, based on the dynamic parameter increase the first default bandwidth to be allocated to the first type of I/O transaction, and decrease a second default bandwidth to be allocated to a second type of I/O transaction.
Example 25 includes the non-transitory computer-readable medium of example 24, wherein the first type of I/O transaction is a non-isochronous I/O transaction, and the second type of I/O transaction is an isochronous I/O transaction.
Example 26 includes the non-transitory computer-readable medium of any of examples 19, 20, 21, 22, 23, 24, or 25, wherein the latency associated with the I/O transaction includes a time at which the I/O transaction is to start.
Example 27 includes a method comprising determining at least one of (1) a first parameter assigned to an input/output (I/O) transaction by a user, (2) a second parameter for the I/O transaction based on at least a class of an I/O device included in the I/O transaction, or (3) a third parameter for the I/O transaction based on a usage pattern for a compute device coupled to the I/O device, determining a dynamic parameter to assign to the I/O transaction based on at least one of the first parameter, the second parameter, or the third parameter, and executing an instruction with at least one processor circuit to at least one of adjust a default bandwidth to be allocated to the I/O transaction based on the dynamic parameter or adjust a latency associated with the I/O transaction based on the dynamic parameter.
Example 28 includes the method of example 27, further including causing an operating system of the compute device to present an I/O configuration user interface (UI), and obtaining the first parameter via the I/O configuration UI.
Example 29 includes the method of any of examples 27 or 28, further including determining at least one class of at least one I/O device coupled to the compute device, determining at least one active I/O transaction including the at least one I/O device, and assigning the second parameter to the I/O transaction based on one or more of (1) the at least one class of the at least one I/O device or (2) the at least one active I/O transaction.
Example 30 includes the method of any of examples 27, 28, or 29, wherein the I/O device is a first I/O device, and the method further includes determining the usage pattern for the compute device based on at least one of (1) at least one second I/O device concurrently in communication with the compute device, (2) a task queue associated with the at least one second I/O device, (3) at least one application executed by the compute device, (4) a duration of usage of the at least one second I/O device, (5) a time of usage of the at least one second I/O device, (6) a size of data to be communicated via the I/O transaction, or (7) a performance characteristic of the compute device.
Example 31 includes the method of any of examples 27, 28, 29, or 30, further including evaluating a first change to a quality of service of the compute device and a second change to a performance of the compute device based on at least one of a status of the compute device, a burden on the compute device, the first parameter, the second parameter, or the third parameter, and determining the dynamic parameter based on the first change and the second change.
Example 32 includes the method of any of examples 27, 28, 29, 30, or 31, wherein the I/O transaction is a first I/O transaction, and the method further includes overriding the dynamic parameter assigned to the first I/O transaction to schedule a second I/O transaction based on the second I/O transaction conserving more power than the first I/O transaction.
Example 33 includes the method of any of examples 27, 28, 29, 30, 31, or 32, wherein the I/O transaction is a first type of I/O transaction, the default bandwidth is a first default bandwidth, and the method further includes, based on the dynamic parameter increasing the first default bandwidth to be allocated to the first type of I/O transaction, and decreasing a second default bandwidth to be allocated to a second type of I/O transaction.
Example 34 includes the method of example 33, wherein the first type of I/O transaction is a non-isochronous I/O transaction, and the second type of I/O transaction is an isochronous I/O transaction.
Example 35 includes the method of any of examples 27, 28, 29, 30, 31, 32, 33, or 34, wherein the latency associated with the I/O transaction includes a time at which the I/O transaction is to start.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus comprising:
at least one of (1) means for causing presentation of an input/output (I/O) configuration user interface (UI) to determine a first parameter assigned to an I/O transaction by a user, (2) means for analyzing a compute device to determine a second parameter for the I/O transaction based on at least a class of an I/O device included in the I/O transaction, or (3) means for determining a usage pattern of the compute device to determine a third parameter for the I/O transaction based on the usage pattern, the compute device coupled to the I/O device; and
means for managing priorities of I/O transactions to:
determine a dynamic parameter to assign to the I/O transaction based on at least one of the first parameter, the second parameter, or the third parameter; and
cause means for scheduling the I/O transaction to at least one of adjust a default bandwidth to be allocated to the I/O transaction based on the dynamic parameter or adjust a latency associated with the I/O transaction based on the dynamic parameter.

2. The apparatus of claim 1, wherein the means for causing presentation of the I/O configuration UI is to:
cause an operating system of the compute device to present the I/O configuration UI;
and
obtain the first parameter via the I/O configuration UI.

3. The apparatus of any of claims 1 or 2, wherein the means for analyzing the compute device is to:
determine at least one class of at least one I/O device coupled to the compute device;
determine at least one active I/O transaction including the at least one I/O device; and
assign the second parameter to the I/O transaction based on one or more of (1) the at least one class of the at least one I/O device or (2) the at least one active I/O transaction.

4. The apparatus of any of claims 1, 2, or 3, wherein the I/O device is a first I/O device, and the means for determining the usage pattern is to determine the usage pattern for the compute device based on at least one of (1) at least one second I/O device concurrently in communication with the compute device, (2) a task queue associated with the at least one second I/O device, (3) at least one application executed by the compute device, (4) a duration of usage of the at least one second I/O device, (5) a time of usage of the at least one second I/O device, (6) a size of data to be communicated via the I/O transaction, or (7) a performance characteristic of the compute device.

5. The apparatus of any of claims 1, 2, 3, or 4, wherein the means for managing priorities of I/O transactions is to:
evaluate a first change to a quality of service of the compute device and a second change to a performance of the compute device based on at least one of a status of the compute device, a burden on the compute device, the first parameter, the second parameter, or the third parameter; and
determine the dynamic parameter based on the first change and the second change.

6. The apparatus of any of claims 1, 2, 3, 4, or 5, wherein the I/O transaction is a first I/O transaction, and the means for scheduling the first I/O transaction is to override the dynamic parameter assigned to the first I/O transaction to schedule a second I/O transaction based on the second I/O transaction conserving more power than the first I/O transaction.

7. The apparatus of any of claims 1, 2, 3, 4, 5, or 6, wherein the I/O transaction is a first type of I/O transaction, the default bandwidth is a first default bandwidth, and the means for managing priorities of I/O transactions is to cause the means for scheduling the first I/O transaction to, based on the dynamic parameter:
increase the first default bandwidth to be allocated to the first type of I/O transaction;
and
decrease a second default bandwidth to be allocated to a second type of I/O transaction.

8. A method comprising:
determining at least one of (1) a first parameter assigned to an input/output (I/O) transaction by a user, (2) a second parameter for the I/O transaction based on at least a class of an I/O device included in the I/O transaction, or (3) a third parameter for the I/O transaction based on a usage pattern for a compute device coupled to the I/O device;
determining a dynamic parameter to assign to the I/O transaction based on at least one of the first parameter, the second parameter, or the third parameter; and
executing an instruction with at least one processor circuit to at least one of adjust a default bandwidth to be allocated to the I/O transaction based on the dynamic parameter or adjust a latency associated with the I/O transaction based on the dynamic parameter.

9. The method of claim 8, further including:
causing an operating system of the compute device to present an I/O configuration user interface (UI); and
obtaining the first parameter via the I/O configuration UI.

10. The method of any of claims 8 or 9, further including:
determining at least one class of at least one I/O device coupled to the compute device;
determining at least one active I/O transaction including the at least one I/O device;
and
assigning the second parameter to the I/O transaction based on one or more of (1) the at least one class of the at least one I/O device or (2) the at least one active I/O transaction.

11. The method of any of claims 8, 9, or 10, wherein the I/O device is a first I/O device, and the method further includes determining the usage pattern for the compute device based on at least one of (1) at least one second I/O device concurrently in communication with the compute device, (2) a task queue associated with the at least one second I/O device, (3) at least one application executed by the compute device, (4) a duration of usage of the at least one second I/O device, (5) a time of usage of the at least one second I/O device, (6) a size of data to be communicated via the I/O transaction, or (7) a performance characteristic of the compute device.

12. The method of any of claims 8, 9, 10, or 11, further including:
evaluating a first change to a quality of service of the compute device and a second change to a performance of the compute device based on at least one of a status of the compute device, a burden on the compute device, the first parameter, the second parameter, or the third parameter; and
determining the dynamic parameter based on the first change and the second change.

13. The method of any of claims 8, 9, 10, 11, or 12, wherein the I/O transaction is a first I/O transaction, and the method further includes overriding the dynamic parameter assigned to the first I/O transaction to schedule a second I/O transaction based on the second I/O transaction conserving more power than the first I/O transaction.

14. The method of claims 8, 9, 10, 11, 12, or 13, wherein the I/O transaction is a first type of I/O transaction, the default bandwidth is a first default bandwidth, and the method further includes, based on the dynamic parameter:
increasing the first default bandwidth to be allocated to the first type of I/O transaction; and
decreasing a second default bandwidth to be allocated to a second type of I/O transaction.

15. A computer program comprising instructions which, when the program is executed by a computer, cause the computer to carry out the method as claimed in any of claims 8 to 14.
